# EUROPÄISCHE PATENTSCHRIFT

(11) **EP 3 182 843 B1**
(45) Veröffentlichungstag und Bekanntmachung des Hinweises auf die Patenterteilung: **28.04.2021**
(21) Anmeldenummer: 15759695.8
(22) Anmeldetag: 21.08.2015
(51) Int. Cl.: A23N 7/08, A23P 20/25

(54) **VERFAHREN UND VORRICHTUNG ZUR HERSTELLUNG EINES HOHLZYLINDRISCHEN, VERZEHRBAREN BEHÄLTERS AUS EINER GEMÜSE- ODER OBSTFRUCHT**
METHOD AND DEVICE FOR PRODUCING A HOLLOW CYLINDRICAL EDIBLE CONTAINER FROM A FRUIT OR A VEGETABLE
PROCEDE ET DISPOSITIF POUR LA PRODUCTION D'UN CONTENEUR CREUX, CYLINDRIQUE ET CONSOMMABLE DES FRUITS OU LEGUMES

(30) Priorität: 22.08.2014 DE 102014112083
(43) Veröffentlichungstag der Anmeldung: 28.06.2017
(73) Patentinhaber: Raeder Capital GmbH, 80799 München (DE)
(72) Erfinder: RAEDER, Niels, 82327 Tutzing (DE)
(74) Vertreter: Flügel Preissner Schober Seidel
(86) Internationale Anmeldenummer: PCT/EP2015/069293
(87) Internationale Veröffentlichungsnummer: WO 2016/026971

(56) Entgegenhaltungen:
- EP-A1- 2 050 346
- EP-A2- 1 867 236
- WO-A1-03/043443
- GB-A- 2 258 608
- US-B1- 7 096 777

## Beschreibung

Die Erfindung betrifft ein Verfahren zur Herstellung eines hohlzylindrischen, verzehrbaren Behälters aus einer Gemüse- oder Obstfrucht, insbesondere einer Gurke, Zucchini oder dergleichen, der mit einer Füllung befüllbar ist, einen nach dem Verfahren hergestellten Behälter sowie eine Vorrichtung zur Durchführung des Verfahrens.

Verzehrbare Behälter zum Befüllen mit einer essbaren Füllung, beispielsweise einer Fleischfüllung, sind in vielfacher Weise bekannt. So kommen zur Herstellung von Hamburgern und Dönern Brötchen zum Einsatz, die mit Fleisch oder Gemüse gefüllt werden. Auch sind sogenannte Hot Dogs bekannt, bei denen ein Brötchen mit einer Bohrung versehen wird, in die eine Wurst eingebracht wird. Aufgrund von Gluten-Unverträglichkeit haben viele Menschen Probleme mit aus Getreide hergestellten Brötchen. Darüber hinaus sind viele Menschen an einer Ernährung interessiert, die wenig Kohlenhydrate aufweist. Aus diesem Grund möchten sie auf den Verzehr von Getreideprodukten verzichten.

Die EP 1 867 236 A2 offenbart ein Bearbeitungswerkzeug für eine Banane, umfassend eine Schneidvorrichtung in Form eines Hohlrohres und zwei halbschalenförmige Haltevorrichtungen. Nach dem Fixieren der Banane in der Haltevorrichtung durch einen ovalen Keil und einen Ring wird die Schneidvorrichtung in die Banane eingeführt, um einen Innenhohlraum zu schaffen, der dann mit einer Füllung wie zum Beispiel Schokolade gefüllt werden kann.

WO 03/043443 A1 offenbart ein Verfahren und eine Vorrichtung zum Bearbeiten von Gemüse, insbesondere von Kartoffeln. Die Kartoffel wird zuerst geformt und geschält. Danach wird ein Deckabschnitt mit einer mechanischen Schneidvorrichtung in horizontaler Richtung von der Kartoffel abgeschnitten. Der Hauptteil wird dann mit Hilfe eines mechanischen Messers ausgehöhlt, sodass die Aushöhlung entsteht. Nun kann eine Füllung in die Aushöhlung eingebracht werden. Der Deckabschnitt wird schließlich wieder an seine ursprüngliche Position gesetzt und die Berührungsflächen werden mit Hilfe von Gemüsestärke wieder miteinander verbunden. Das nun vorbereitete Produkt kann dann weiterverarbeitet werden.

GB 2 258 608 A offenbart einen Kernbohrer für ein Essensprodukt, insbesondere eine Kartoffel. Der Kernbohrer weist einen ausklappbaren Schneidezahn auf. Somit ist es möglich in eine Kartoffel eine Kammer zu bohren, die breiter ist, als der Durchmesser des Bohrers. Zusätzlich wird eine Klammer offenbart, in der die Kartoffel fixiert wird. Die Klammer wird durch eine Hubtraverse angehoben und in Richtung des Kernbohrers bewegt, um die Kartoffel auszuhöhlen.

US 7 096 777 B1 offenbart eine Vorrichtung für die industrielle Verarbeitung einer Ananasfrucht. Dabei wird die Frucht eingespannt, die Endbereiche abgetrennt, der vollständig Kern ausgehöhlt und die Außenschalen entfernt. Als Endprodukt erhält man dann die bekannten ringförmigen Ananasstücke.

In der EP 2 050 346 wird eine Vorrichtung zum Aushöhlen einer Frucht, insbesondere einer Banane, beschrieben. Der Innenhohlraum kann dann mit einer Füllung gefüllt werden. Die Frucht wird mit ihrer Schale zunächst in einer Zentriereinrichtung begradigt. Zur Bildung des Innenhohlraumes wird ein Hohlrohr manuell in Längsrichtung der Frucht eingeführt, um den Kern zu entfernen. Dabei wird der Kern nur über einen Teilbereich der Frucht ausgehöhlt.

Der vorliegenden Erfindung liegt die **Aufgabe** zugrunde, ein Verfahren und eine Vorrichtung vorzuschlagen, mit dem ein hohlzylinderförmiger, verzehrbarer Behälter herstellbar ist, der mit einer Füllung befüllbar ist.

Zur **Lösung** dieser Aufgabe wird ein Verfahren nach Anspruch 1 und eine Vorrichtung nach Anspruch 7 vorgeschlagen. Erfindungsgemäß wird aus der Gemüse- oder Obstfrucht ein vollständig verzehrbarer Behälter hergestellt, dessen Innenhohlraum mit einer Füllung befüllbar ist. Sowohl mindestens ein Endbereich der Gemüse- oder Obstfrucht als auch die Schale werden entfernt. Die Zentriereinrichtung wechselt dabei von einer Zentrierstellung in eine Schälstellung. In der Zentrierstellung wird die Frucht in der Zentriereinrichtung zentriert und fixiert, mindestens einer der Endbereiche der Frucht abgetrennt und der Kern der Frucht zur Bildung eines Innenhohlraumes ausgehöhlt, wobei der Kern nur über einen Teilbereich der Frucht ausgehöhlt wird, so dass ein geschlossener Boden der Frucht zurückbleibt. In der Schälstellung wird die Außenschale der Frucht entfernt.

Da der Behälter aus einer Gemüse- oder Obstfrucht hergestellt ist, treten keine Probleme mit einer Gluten-Unverträglichkeit auf. Darüber hinaus eignet sich der verzehrbare Behälter zur Aufnahme der Füllung für eine kohlenhydratarme Ernährung. Da bei dem Behälter nur ein Teilbereich der Frucht ausgehöhlt wird, weist er einen Boden auf, der ein Heraustreten der Füllung verhindert.

Das erfindungsgemäße Verfahren kann bei unterschiedlichem Gemüse oder Obst Verwendung finden. Insbesondere eignet es sich aber für Gurken.

Bei dem erfindungsgemäßen Verfahren erfolgt zunächst ein Zentrieren und Fixieren der Frucht sowie Nivellieren der Frucht über deren gesamte Länge in einer Zentriereinrichtung. Nachfolgend wird mindestens ein Endbereich der Frucht abgetrennt. Anschließend wird der Kern oder ein Kernbereich der Frucht zur Bildung eines Innenhohlraums mit einem Boden teilweise ausgehöhlt. Schließlich erfolgt ein Entfernen einer Außenschale der Frucht. Durch das Zentrieren der Frucht wird insbesondere bei einer gebogenen Frucht ein Aushöhlen ermöglicht und der Verschnitt minimiert.

Das erfindungsgemäße Verfahren und die erfindungsgemäße Vorrichtung gestatten eine automatische Bearbeitung der Ausgangsfrucht.

Das erfindungsgemäße Verfahren wird vorzugsweise mit der erfindungsgemäßen Vorrichtung ausgeführt.

Vorteilhafte Ausgestaltungen des erfindungsgemäßen Verfahrens sind Gegenstand der Unteransprüche.

Vorteilhaft wird der Innenhohlraum des Behälters mit einer geeigneten Füllung befüllt. Dabei handelt es sich insbesondere um Bio-Füllungen wie Huhn, Rind, Lachs, Thunfisch, Salat, Reis oder Mischungen hiervon.

Die Außenseite des verzehrbaren Behälters kann bearbeitet werden. Dabei kann insbesondere eine körnige Beschichtung, insbesondere aus Sesam oder Kokos, auf die Außenseite des Behälters aufgebracht werden. Hierdurch wird eine trockene Oberfläche erzielt, die die Griffsicherheit des Behälters (Containers) erhöht.

In vorteilhafter Ausgestaltung wechselt die Zentriereinrichtung zum Zentrieren der Frucht und Fixieren der Frucht von außen von einer Ruhestellung in eine Zentrierstellung. Die Zentriereinrichtung besteht beispielsweise aus mehreren zueinander beabstandeten Halteelementen, die zwei Halteschalen bilden, die die Frucht entsprechend von einer ersten Seite und einer zweiten Seite fixieren. Beispielsweise ist die Zentriereinrichtung in der Ruhestellung geöffnet, das heißt die Frucht ist dabei in der Ruhestellung in die Zentriereinrichtung einsetzbar. Insbesondere ist die Zentriereinrichtung in der Zentrierstellung geschlossen, das heißt in der Zentrierstellung ist die Frucht fest fixiert und zentriert. In der Zentrierstellung wird die Frucht beispielsweise derart fixiert, dass Krümmungen der Frucht ausgeglichen werden können und die Frucht möglichst gerade in der Zentriereinrichtung fixiert werden kann.

In vorteilhafter Ausgestaltung wird die Frucht in der Schälstellung von einer Halteeinrichtung gehalten. Die Halteeinrichtung bietet im Gegensatz zur Zentriereinrichtung den Vorteil, dass sie die Frucht von Innen halten kann und damit die Außenfläche der Frucht frei lässt. Vor allem wenn die Frucht geschält werden soll, ist es hilfreich die Frucht von der Innenseite zu halten.

Vorteilhaft wird ein Hohlrohr der Halteeinrichtung in den Hohlraum der Frucht eingeführt, um die Frucht zu fixieren. Durch das Einführen des Hohlrohres in den Innenhohlraum der Frucht wird ein Halten der Frucht nur von der Innenseite der Frucht ermöglicht. Die Außenseite der Frucht bleibt somit frei und kann bearbeitet werden.

Da der Durchmesser des Hohlrohres in etwa dem Durchmesser des Hohlraumes der Frucht entspricht, bildet sich nur ein kleiner Raum zwischen dem Hohlrohr und der Frucht, wenn das Hohlrohr in den Innenhohlraum der Frucht eintritt. Aufgrund der in der Frucht gespeicherten Flüssigkeit, die die Innenseite der Frucht befeuchtet, verhindert die Reibung der Flüssigkeit an der Innenoberfläche der Frucht mit der Außenfläche des Hohlrohres ein Verdrehen der Frucht auf dem Hohlrohr. Die Reibung ist dabei direkt abhängig von der Kontaktfläche zwischen Hohlrohr und Innenseite der Frucht. Solange die Reibung größer ist als die Kraft, die die Schäleinrichtung auf die Frucht wirken lässt, wenn diese geschält wird, ist ein optimaler Betrieb gewährleistet. Beispielsweise hat das Hohlrohr eine möglichst glatte Oberfläche, um die Kontaktfläche zwischen dem Hohlrohr und der Innenseite der Frucht und somit die Reibkraft zwischen dem Hohlrohr und der Frucht zu maximieren.

Durch das Halten der Frucht im Inneren mit Hilfe eines Hohlrohres, ist es der Schäleinrichtung außerdem möglich, die Frucht von außen zu schälen, was mit einer in der Zentriereinrichtung eingespannten Frucht nicht möglich ist.

In vorteilhafter Ausgestaltung wird die Frucht zum Entfernen von der Halteeinrichtung an einer Abstreifeinrichtung abgestreift. Beispielsweise weist die Abstreifeinrichtung eine Abstreifplatte und eine Durchgangsöffnung in der Abstreifplatte auf. Beispielsweise ist der Durchmesser der Frucht größer als der Durchmesser des Hohlrohres der Halteeinrichtung. Ein Bewegen des Hohlrohres durch eine dafür vorgesehene Durchgangsöffnung der Abstreifplatte mit einem nur leicht größeren Durchmesser als das Hohlrohr führt dazu, dass die Frucht, die einen größeren Durchmesser als die Öffnung der Abstreifplatte aufweist, durch die Abstreifplatte in Richtung der Bewegung des Hohlrohres blockiert wird und somit an der Abstreifplatte von dem Hohlrohr heruntergestreift wird.

Vorteilhaft erfolgt beim Zentrieren und Fixieren der Frucht durch die Zentriereinrichtung ein Nivellieren der Frucht über ihre gesamte Länge. In der Zentrierstellung wird die Frucht beispielsweise von jedem der Halteelemente zentriert. Anschließend wird die Frucht durch vertikales Verschieben der einzelnen Halteelemente nivelliert. Somit werden Krümmungen der Frucht ausgeglichen und die Frucht kann möglichst gerade in der Zentriereinrichtung fixiert werden. Dies führt zu einer Maximierung des bearbeitbaren Fruchtkörpers und einer Reduzierung des anfallenden Ausschusses.

Die erfindungsgemäße Vorrichtung zur Durchführung des Verfahrens gemäß Anspruch 7 weist eine Zentriereinrichtung zum Zentrieren und Fixieren sowie Nivellieren der Frucht über deren gesamte Länge, eine Aushöhleinrichtung zum Entfernen des Kerns der Frucht und Bildung eines Innenhohlraumes, eine Schäleinrichtung zum Entfernen der Außenschale der Frucht, wobei die Zentriereinrichtung von einer Zentrierstellung, in der die Frucht zentriert, fixiert und nivelliert, mindestens einer der Endbereiche der Frucht abgetrennt und der Kern der Frucht zur Bildung eines Innenhohlraumes ausgehöhlt wird, in eine Schälstellung, in der die Außenschale entfernt wird, wechselt. Somit kann mit der erfindungsgemäßen Vorrichtung ein hohlzylinderförmiger, verzehrbarer Behälter aus einer Gemüse- oder Obstfrucht mit einem befüllbaren Innenhohlraum hergestellt werden.

Die genannten Einrichtungen können manuell oder mit einem Antrieb ausgebildet sein.

Vorteilhaft sind die Zentriereinrichtung und/oder die Aushöhleinrichtung und/oder die Schäleinrichtung relativ zueinander verfahrbar. Beispielsweise sind die Zentriereinrichtung und/oder die Aushöhleinrichtung und/oder die Schäleinrichtung auf einer oder mehreren Schienen zueinander verfahrbar. Insbesondere ist es möglich, dass eine oder mehrere der Einrichtungen fest fixiert sind, solange zumindest eine der Einrichtungen verfahrbar ist. Es können allerdings auch mehrere der Einrichtungen oder alle Einrichtungen verfahrbar angebracht sein. Die Verfahrbarkeit der Einrichtungen zueinander erleichtert ein automatisches Ausführen der Verfahrensschritte, beispielsweise durch ein Verfahren mit Hilfe eines Elektromotors.

In vorteilhafter Ausgestaltung kann die Aushöhleinrichtung und/oder die Schäleinrichtung ein Hohlmesser aufweisen, das mit einem Antrieb gekoppelt ist. Hierbei kommen insbesondere rotierende Hohlmesser zum Einsatz, deren Durchmesser der zu verarbeitenden Frucht angepasst ist. Somit sind die Messer austauschbar ausgebildet. Der Antrieb kann beispielsweise ein Elektromotor sein, und sowohl das Drehen des Hohlmessers, als auch das horizontale Verfahren der Aushöhleinrichtung antreiben.

In vorteilhafter Ausgestaltung kann die Zentriereinrichtung mindestens zwei die Frucht umschließende Zentrierschalen aufweisen. Eine vorteilhafte Ausführungsform weist vier zueinander verstellbare Zentrierschalen auf, die an zugeordneten Haltern festgelegt sind.

Weiterhin kann die Vorrichtung eine Schneideinrichtung zum Abtrennen eines Endbereiches der Frucht aufweisen.

Vorteilhaft weist die Vorrichtung eine Befülleinrichtung zum Einbringen einer Füllung in den Innenhohlraum auf. Hierbei kann die Befülleinrichtung einen schalenförmigen Schlitten zur Aufnahme der Füllung und einen relativ hierzu verfahrbaren Kolben zum Entleeren des Schlittens aufweisen.

In vorteilhafter Ausgestaltung ist eine Steuereinrichtung vorgesehen, die ein automatisches Zustellen der Aushöhleinrichtung und/oder der Schäleinrichtung und/oder der Befülleinrichtung steuert.

Bei einer vorteilhaften Ausführungsform weist die Vorrichtung eine Fördereinheit auf, um die einzelnen Elemente der Vorrichtung ein- oder mehrdimensional gegeneinander verschiebbar anzuordnen.

Vorteilhaft hat die Fördereinheit Förderspindeln zur Förderung der einzelnen Elemente.

Bei einer vorteilhaften Ausführungsform weist die Vorrichtung einen Grundkörper mit einer in Längsrichtung verlaufenden Nut zum Einführen der Zentriereinrichtung und/oder der Aushöhleinrichtung und/oder der Schäleinrichtung und/oder der Befülleinrichtung auf. Somit ist die Vorrichtung modulartig ausgebildet, wobei die einzelnen Einrichtungen jeweils mit der Längsnut korrespondierende Halter aufweisen, die an dem Grundkörper festgelegt werden können. Auch kann die elektrische Verbindung der an dem Grundkörper festgelegten Einrichtungen über die Längsnut erfolgen.

In vorteilhafter Ausgestaltung weist die Zentriereinrichtung eine Halteeinheit auf, mittels welcher die Frucht fixiert und zentriert werden kann.

Vorteilhaft umfasst die Halteeinheit mehrere Halteelemente, die in Längsrichtung versetzt angeordnet sind.

In vorteilhafter Ausgestaltung bilden die Haltelemente mindestens eine erste Haltebacke und eine zweite Haltebacke aus, die relativ zueinander verfahrbar sind. Beispielsweise können die die Haltebacken voneinander entfernt werden oder aufeinander zubewegt werden.

Vorteilhaft weisen die Haltebacken eine halbkreisförmige Aufnahmefläche auf, um sich der Frucht bestmöglichst anzupassen.

Vorteilhaft sind die Halteelemente mit einem Drucksensor ausgestattet. Mit Hilfe des Drucksensors kann eine möglichst schonende Behandlung der Frucht sichergestellt werden. Wenn die Frucht durch die Zentriereinrichtung/Halteeinheit fixiert wird, werden Krümmungen der Frucht durch Biegen ausgeglichen und die Frucht über ihre gesamte Länge nivelliert. Dabei werden die Krümmungen der Frucht bestmöglichst ausgeglichen und die Frucht in der Zentriereinrichtung zentriert ohne die Frucht dabei zu beschädigen. Mit Hilfe des Drucksensors kann die Frucht in den einzelnen Halteelementen zentriert werden und danach durch ein vertikales Verschieben der Haltelemente zueinander in einer Ebene nivelliert werden. Außerdem ermöglicht der Drucksensor ein möglichst optimales Ausrichten der Frucht, wodurch der für den als Endprodukt entstehenden essbaren Behälter verwendete Fruchtkörper zur Bearbeitung maximiert werden kann.

In vorteilhafter Ausgestaltung ist die Schneidvorrichtung zum Schneiden eines definierten Bodens im Hohlraum der Frucht ausgebildet. Insbesondere ist der Boden durch die Form der Schneidvorrichtung definiert, sodass beispielsweise ein konkaver, konvexer oder planer Boden entsteht.

Vorteilhaft ist die Aushöhleinrichtung als Spiralbohrer ausgebildet, bei dem stirnseitig die Schneidvorrichtung zum Schneiden eines definierten Bodens angeordnet ist. Die Aushöhleinrichtung ist ausgebildet einen Kern der Frucht zu entfernen und einen Innenhohlraum in der Frucht zu schaffen. Somit entspricht der Durchmesser des Spiralbohrers dem Durchmesser des Innenhohlraumes der Frucht. Weiterhin kann die Aushöhleinrichtung je nach verwendeter Frucht verschiedene Durchmesser aufweisen, um abhängig von der verwendeten Frucht vordefinierte Innenhohlräume und somit vordefinierte Wandstärken der ausgehöhlten Frucht zu ermöglichen. Die gewünschte Wandstärke der ausgehöhlten Frucht wird entsprechend der Stabilität der Frucht als auch ihrer Länge bestimmt. Mit zunehmender Länge der ausgehöhlten Frucht nimmt dessen Stabilität ab. Ebenso weisen verschiedene Früchte unterschiedliche Eigenschaften bezüglich ihrer Stabilität auf. Durch die oben beschriebene Zentriereinrichtung mit Drucksensoren zur Maximierung des zu bearbeitenden Fruchtkörpers und die je nach Frucht variable Aushöhleinrichtung kann eine besonders dünne Wand mit gleichmäßiger Wandstärke erreicht werden, ohne die Stabilität der ausgehöhlten Frucht zu stark zu gefährden.

In vorteilhafter Ausgestaltung weist die Vorrichtung eine Halteeinrichtung zum Fixieren der Frucht auf. Beispielsweise kann die Halteeinrichtung die Frucht von Innen fixieren. Vorteilhaft weist die Halteeinrichtung ein Hohlrohr mit einer Entlüftungsöffnung auf. Das Hohlrohr weist in etwa den Durchmesser des Innenhohlraums der Frucht auf und ist geeignet, in den Innenhohlraum der Frucht einzutreten, um die Frucht von innen zu halten.

Da die Stabilität einer ausgehöhlten Frucht meist sehr gering ist, wird durch die Entlüftungsöffnung eine Beschädigung der Frucht vermieden. Hierdurch treten beim Bearbeiten der Frucht keine Druckunterschiede zwischen dem Inneren der Frucht und der Umgebung auf.

In vorteilhafter Ausgestaltung weist das Hohlrohr eine glatte Oberfläche auf. Eine möglichst glatte Oberfläche bietet eine besonders große Kontaktfläche des Hohlrohres zu der Innenseite der Frucht und ist proportional zur Größe der Reibkraft zwischen Frucht und Hohlrohr. Bei zu geringer Kontaktreibung zwischen Frucht und Hohlrohr, kann sich die Frucht auf dem Hohlrohr verdrehen, wenn die Schäleinrichtung versucht die Frucht von außen zu schälen. Deshalb ist darauf zu achten, die Kontaktreibung zu maximieren.

Vorteilhaft weist die Schäleinrichtung eine Abstreifeinrichtung zum Abstreifen der Frucht von dem Hohlrohr auf.

In vorteilhafter Ausgestaltung weist die Schäleinrichtung ein horizontal verfahrbares Schälmesser auf. Beispielsweise ist das Schälmesser ausgebildet, Endbereiche der Frucht von der Frucht zu trennen.

Vorteilhaft weist die Abstreifeinrichtung eine Abstreifplatte mit einer Durchgangsöffnung zum Abstreifen der Frucht von dem Hohlrohr auf. Um die Frucht nach dem Schälvorgang wieder von dem Hohlrohr zu trennen, wird das Hohlrohr durch eine Durchgangsöffnung der Abstreifvorrichtung geführt. Die auf dem Hohlrohr durch Kontaktreibung fixierte Frucht passt nicht durch diese Durchgangsöffnung und wird somit an der Abstreifplatte von dem Hohlrohr abgestreift.

In vorteilhafter Ausgestaltung sind die Zentriereinrichtung und die Schäleinrichtung gemeinsam vertikal verfahrbar am Grundkörper befestigt, um von einer Zentrierstellung in eine Schälstellung wechseln zu können. In der Zentrierstellung hat die Aushöhleinrichtung durch horizontales Verschieben Zugang zu der zu bearbeitenden Frucht während in der Schälstellung die Halteeinrichtung durch horizontales Verschieben Zugang zu der zu bearbeitenden Frucht hat.

Vorteilhaft sind die Halteeinrichtung und die Aushöhleinrichtung gemeinsam horizontal verfahrbar am Grundkörper befestigt.

Die genannten Einrichtungen können manuell oder mit einem Antrieb ausgebildet sein.

Vorteilhaft weist die Vorrichtung eine Reinigungseinrichtung zum Reinigen der Aushöhleinrichtung und/oder der Schäleinrichtung und/oder der Halteeinrichtung auf. Die Reinigungseinrichtung hat beispielsweise Reinigungsdüsen, die den Spiralbohrer der Aushöhleinrichtung beim Herausfahren aus der Frucht reinigen, das Hohlrohr der Halteeinrichtung beim Herausfahren aus der Frucht reinigen und das Schälmesser der Schäleinrichtung nach dem Schälen der Frucht reinigen.

Als Reinigungsfluid kann beispielsweise Luft und/oder Wasser und/oder Reinigungsflüssigkeit verwendet werden.

In vorteilhafter Ausführung weist die Vorrichtung eine Auffangeinrichtung zum Auffangen des Kerns und/oder der Schale der Frucht auf, die unter der ersten und zweiten Bearbeitungsvorrichtung angeordnet sein kann. Beispielsweise kann die Auffangeinrichtung als Transportbehälter ausgebildet sein. Somit kann schon während des Bearbeitens der Frucht der Kern der Frucht von der Schale der Frucht getrennt werden und separat entsorgt bzw. weiterverarbeitet werden. Vorzugsweise hat die Auffangeinrichtung eine Saugeinrichtung, mittels welcher der Kern der Frucht und/oder die Schale der Frucht in die Auffangeinrichtung gesaugt werden kann.

Nachfolgend wird die Erfindung anhand von Ausführungsbeispielen näher erläutert, die schematisch in den Zeichnungen dargestellt sind. Hierin zeigen:
- Fig. 1: eine perspektivische Darstellung einer erfindungsgemäßen Vorrichtung zur Aufnahme einer Gurke nach einer ersten Ausführungsform;
- Fig. 2: eine Vorderansichtansicht der Zentriereinrichtung im geöffneten und geschlossenen Zustand nach der ersten Ausführungsform;
- Fig. 3: die erfindungsgemäße Zentriereinrichtung und Schneideinrichtung zum Entfernen der Endbereiche der Gurke nach der ersten Ausführungsform;
- Fig. 4: die Aushöhleinrichtung zum Entfernen des Kerns der Gurke nach der ersten Ausführungsform;
- Fig. 5: die Schäleinrichtung zum Entfernen der Außenschale nach der ersten Ausführungsform;
- Fig. 6: das Ausfahren des Kernteiles mittels der Aushöhleinrichtung nach der ersten Ausführungsform;
- Fig. 7: die Befülleinrichtung zum Einbringen einer Füllung nach der ersten Ausführungsform;
- Fig. 8: das Entfernen des befüllten Behälters aus der Schäleinrichtung nach der ersten Ausführungsform;
- Fig. 9: einen Vertikalschnitt durch einen erfindungsgemäßen verzehrbaren Behälter mit in den Innenhohlraum eingebrachter Füllung nach der ersten Ausführungsform;
- Fig. 10: eine perspektivische Darstellung einer erfindungsgemäßen Vorrichtung zur Aufnahme einer Gurke nach einer zweiten Ausführungsform;
- Fig. 11: eine vergrößerte Ansicht der Schneideinrichtung zum Schneiden eines definierten Boden im Hohlraum der Gurke aus Fig. 10;
- Fig. 12: die Zentriereinrichtung in Ruhestellung und in Zentrierstellung nach der zweiten Ausführungsform;
- Fig. 13: die Aushöhleinrichtung zum Entfernen des Kerns der Gurke nach der zweiten Ausführungsform;
- Fig. 14: den Transport der Gurke nach dem Aushöhlen zu einer Stellung in der die Gurke geschält wird nach einer zweiten Ausführungsform.
- Fig. 15: die Schäleinrichtung zum Entfernen der Außenschale nach der zweiten Ausführungsform;
- Fig. 16: den befüllbaren Behälter, der durch die Bearbeitung der Gurke durch die Vorrichtung nach der zweiten Ausführungsform hergestellt wurde.

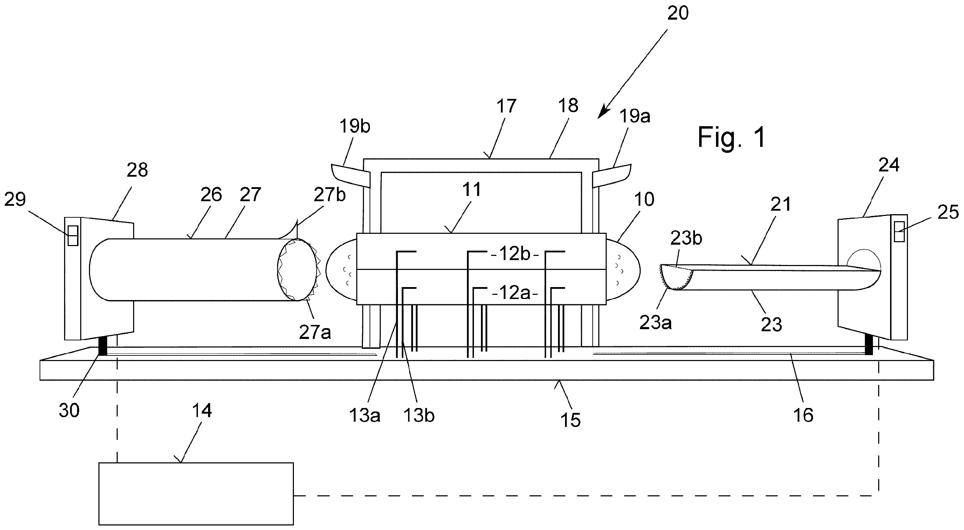

Fig. 1 zeigt eine Vorrichtung 20 zur Herstellung eines hohlzylindrischen, verzehrbaren Behälters aus einer Gurke 10 nach einer ersten Ausführungsform. Die Vorrichtung 20 weist eine Zentriereinrichtung 11, eine Aushöhleinrichtung 21 sowie eine Schäleinrichtung 26 auf. Die genannten Einrichtungen 11, 21 und 26 sind an einem Grundkörper 15 festgelegt, der eine Längsnut 16 zur Aufnahme der Einrichtungen 21 und 26 aufweist. An der Längsnut 16 sind nicht dargestellte elektrische Kontakte vorgesehen, die die eingeschobenen Einrichtungen 21 und 26 mit Strom versorgen.

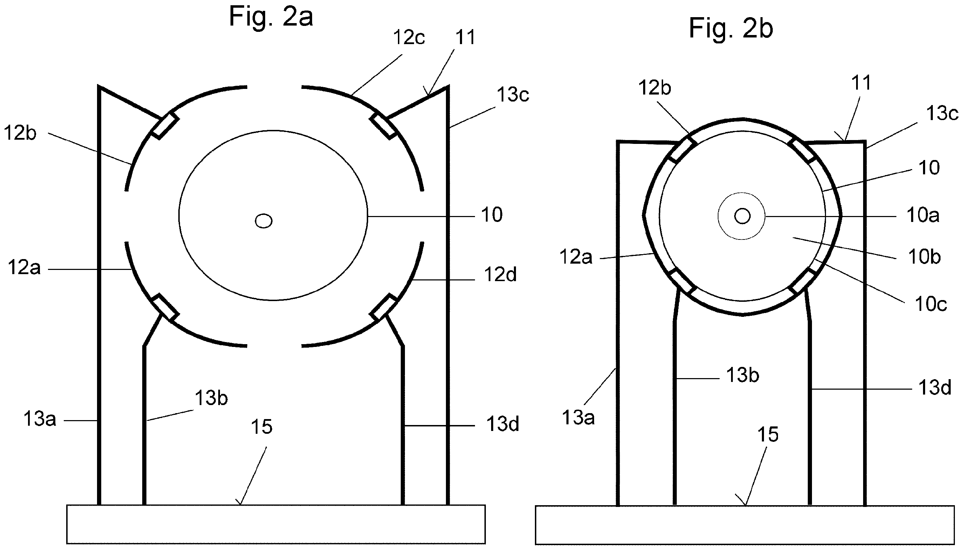

Die Zentriereinrichtung 11 weist, wie in Fig. 2a dargestellt ist, vier Zentrierschalen 12a, 12b, 12c, 12d auf, die in Umfangsrichtung versetzt an zugeordneten Haltern 13a, 13b, 13 c, 13 d festgelegt sind. Die Zentrierschalen 12a, 12b, 12c, 12d sind zueinander verstellbar ausgebildet und liegen im geschlossenen Zustand an der Außenseite der Gurke 10 an.

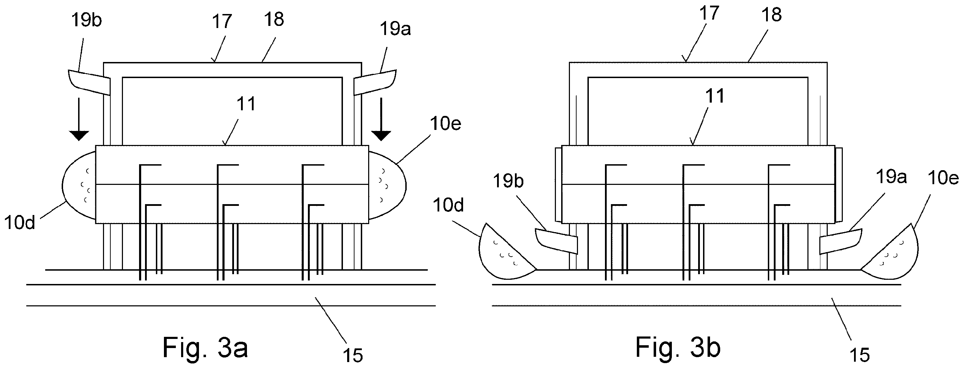

Im Bereich der Zentriereinrichtung 11 ist eine Schneideinrichtung 17 angeordnet, die einen Ständer 18 aufweist, der an dem Grundkörper 15 festgelegt ist. An dem Ständer 18 sind zwei Messer 19a, 19b verfahrbar angeordnet, die dem Abtrennen der Endbereiche 10d, 10e der Gurke 10 dienen. Dies wird im Zusammenhang mit Fig. 3 beschrieben.

Die Aushöhleinrichtung 21 weist ein Hohlmesser 23 auf, das endseitig mit einer Verzahnung 23a versehen ist. Das Hohlmesser 23 ist an dem gegenüberliegenden Ende mit einem Antrieb 24 verbunden, in dem beispielsweise ein Elektromotor vorgesehen ist. Die Betätigung des Antriebes 24 erfolgt über einen Schalter 25.

Die Aushöhleinrichtung 21 dient der Entfernung des Kerns 10a der Gurke 10. Hierzu kann die Aushöhleinrichtung 21 bezüglich der Zentriereinrichtung 11 in Längsrichtung verfahren werden. Dabei erfolgt ein Aushöhlen nur teilweise, so dass ein geschlossener Boden 10d der Gurke 10 zurückbleibt.

Die Schäleinrichtung 26, die auch als Fräse ausgebildet sein kann, dient zur Entfernung der Außenschale 10c der Gurke 10. Die Schäleinrichtung 26 weist ein Hohlmesser 27 auf, dessen freies Ende mit einer Verzahnung 27a versehen ist. Das Hohlmesser 27 ist mit einem Antrieb 28 verbunden, der einen nicht näher dargestellten Elektromotor aufweist. Der Antrieb 28 ist über Schalter 29 betätigbar. Über einen Fuß 30 ist die Schäleinrichtung 26 an der Längsnut 16 des Grundkörpers 15 festgelegt.

Die Schäleinrichtung 26 ist bezüglich der Zentriereinrichtung 11, in der die Gurke 10 aufgenommen ist, relativ verfahrbar. Mit der Schäleinrichtung 26 kann die Außenschale der Gurke 10 entfernt werden. Gleichzeitig wird durch das Abschälen der Außenschale erreicht, dass eine gleichförmige Oberseite der Gurke 10 erzielt wird.

Eine Steuereinrichtung 14 steuert ein automatisches Zustellen der Aushöhleinrichtung 21, der Schäleinrichtung 26 und einer Befülleinrichtung 36.

Nachfolgend soll anhand der Figuren 2, 3 und 4 das Zentrieren, Ablängen und Aushöhlen der Gurke 10 beschrieben werden.

Fig. 2 zeigt die Zentriereinrichtung 11 in einer Vorderansicht. Mittels der Zentriereinrichtung 11 wird die Gurke 10, die oftmals gebogen ist, sowohl zentriert als auch fixiert.

In Fig. 2a sind die Zentrierschalen 12a, 12b, 12c und 12d geöffnet. Die gebogene Gurke 10 ist in der Zentriereinrichtung 11 eingelegt. Fig. 2b zeigt die Zentriereinrichtung 11 im geschlossenen Zustand, in dem die Zentrierschalen 12a, 12b, 12c und 12d an der Außenseite der Gurke 10 anliegen und diese zentrieren und begradigen. Die Zentrierung der Gurke 10 ermöglicht ein Aushöhlen der Gurke 10 und minimiert den Verschnitt.

Fig. 3 zeigt das Abtrennen der Endbereiche 10d, 10e der Gurke 10 mittels der Schneideinrichtung 17. Die an der Schneideeinrichtung 17 mit Abstand zueinander angeordneten Messer 19a, 19b werden in Richtung der Pfeile nach unten verfahren, wodurch die Endbereiche 10d, 10e der Gurke 10 abgetrennt werden.

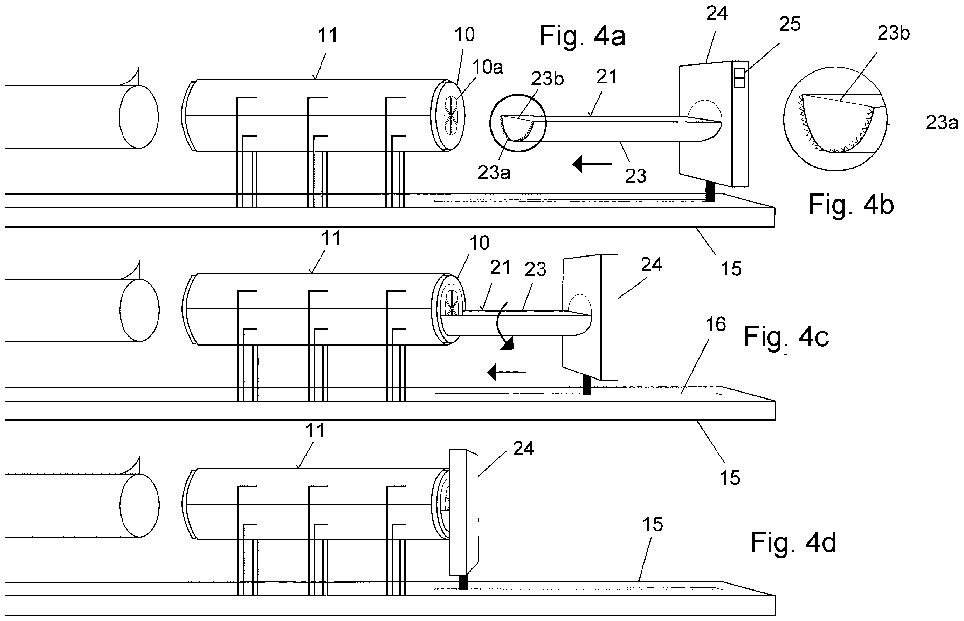

Die Funktionsweise der Aushöhleinrichtung 21 soll anhand Fig. 4 erläutert werden. Aus Fig. 4a und 4b ist ersichtlich, dass das Hohlmesser 23 der Aushöhleinrichtung 21 endseitig eine Verzahnung 23a und eine Schneidvorrichtung 23b aufweist, die als Schneiddraht ausgebildet ist. Statt eines Schneiddrahtes 23b kann auch ein Schneiddorn verwendet werden. Wie aus der vergrößerten Darstellung gemäß Fig. 4b hervorgeht, verbindet der Schneiddraht 23b die freien Endbereiche der Verzahnung 23a. Die Schneidvorrichtung 23b dient der Abtrennung des Kern 10a von dem Boden 10d der Gurke 10.

Wie in Fig. 4c dargestellt, wird die Aushöhleinrichtung 21 bezüglich der Zentriereinrichtung 11 verfahren, sodass das Hohlmesser 23, das von dem Antrieb 24 in Drehung versetzt wird, in die Gurke 10 eindringt. Dabei wird der Kern 10a bzw ein definierter Teil des Innenraumes der Gurke 10 ausgehöhlt. In Fig. 4d ist die Endposition dargestellt. Der Schneiddraht 23b dient der Abtrennung des Kerns 10 a von dem Boden 10d nach dem Aushöhlen des Innenhohlraums.

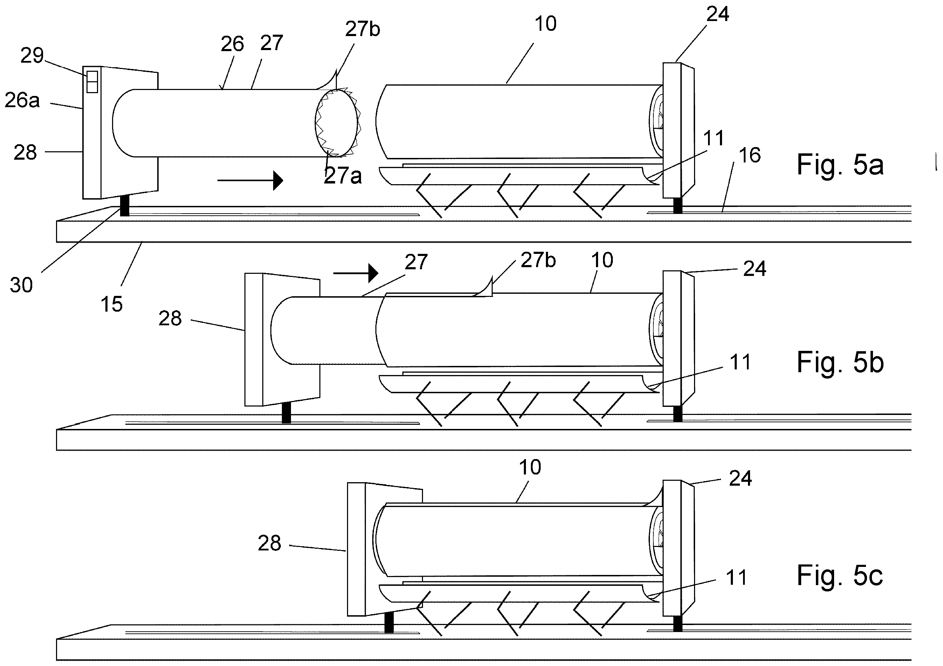

Die Funktionsweise der Schäleinrichtung 26 wird anhand von Fig. 5 beschrieben. Zunächst wird die Zentriereinrichtung 11 geöffnet, sodass die an der Aushöhleinrichtung 21 aufgenommen Gurke 10 an ihrer Außenseite freiliegt. Dann wird die Schäleinrichtung 26 zugestellt, wobei das Hohlmesser 27 die Außenschale 10c der Gurke 10 entfernt. Der Dorn 27b des Hohlmessers 27 durchtrennt die Außenschale 10c der Gurke 10. Fig. 5c zeigt die Endposition im eingefahrenen Zustand der Schäleinrichtung 26.

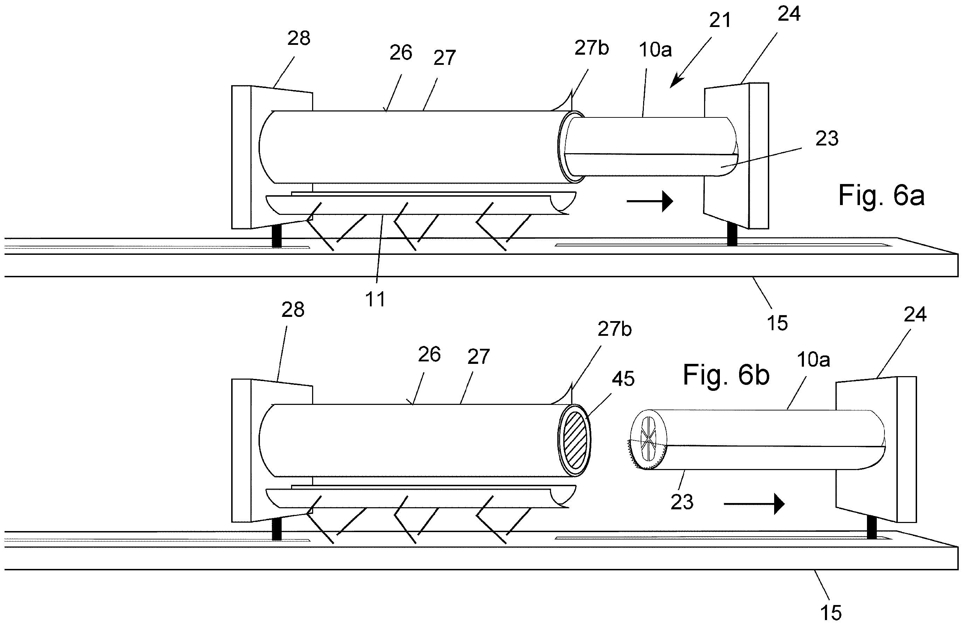

Fig. 6 zeigt das Ausbringen des Kerns 10a aus der Gurke 10 mittels der Aushöhleinrichtung 21. Der Kern 10a, der auf dem Hohlmesser 23 aufliegt, wird mit diesem ausgefahren. Dabei verbleibt der hohlzylindrische Behälter 45 in dem Hohlmesser 27 der Schäleinrichtung 26. Zur Unterstützung oder alternativ kann auch eine pneumatische Absaugung vorgesehen sein.

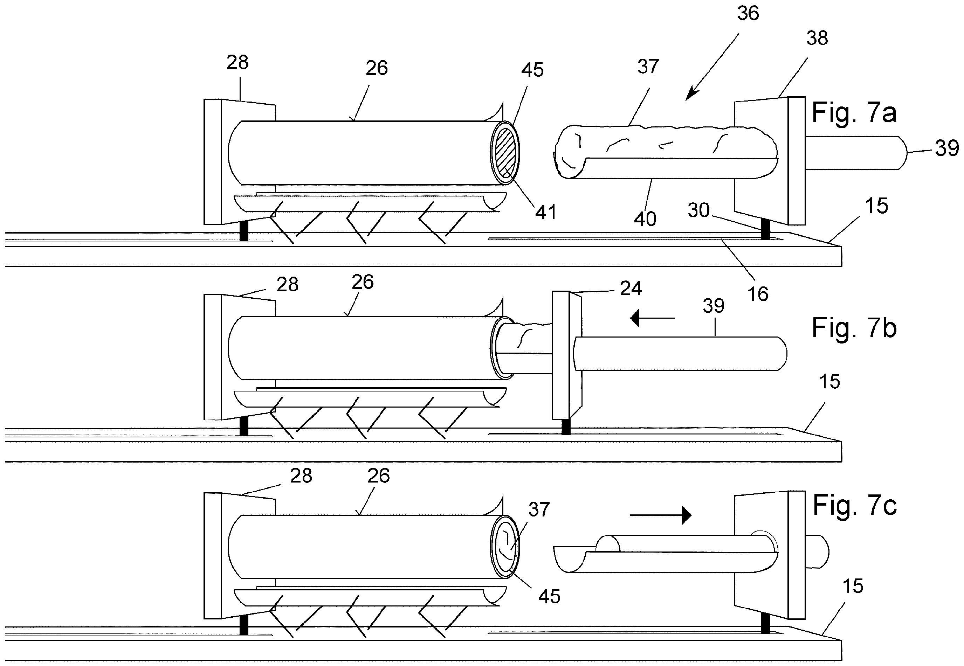

Fig. 7 zeigt die an der Vorrichtung 20 vorgesehene Befülleinrichtung 36 zum Einbringen einer Füllung 37 in den Innenhohlraum 41 der Gurke 10. Die Befülleinrichtung 36 weist einen Schlitten 40 zur Aufnahme der Füllung 37 auf. Hierbei ist der Schlitten 40 halbschalenförmig ausgebildet. Zusätzlich kann eine nicht dargestellte Abdeckschale vorgesehen sein, um die Füllung 37 zu verpressen und dem Innenhohlraum 41 anzupassen. Der Schlitten 40 ragt von einem Lagerblock 38 ab, der über einen Fuß 30 in der Längsnut 16 des Grundkörpers 15 festgelegt ist. An dem Lagerblock 38 ist weiterhin ein Kolben 39 aufgenommen, der bezüglich des Lagerblocks 38 verfahrbar ist. Hierzu ist in dem Lagerblock 38 ein Antrieb für den Kolben 39 vorgesehen. Der Außendurchmesser des Kolbens 39 ist dem Innendurchmesser des Schlittens 40 angepasst und liegt in dem Schlitten 40 ein.

Fig. 7a zeigt die Befülleinrichtung 36 in ihrer Ausgangsposition bezüglich der Schäleinrichtung 26, an der der Behälter 45 aufgenommen ist. In der Position gemäß Fig. 7b ist die Befülleinrichtung nahezu vollständig in den Behälter eingefahren. In dieser Position wir der Kolben 39 angesteuert um die Füllung einzupressen. Schließlich wird die Befülleinrichtung 36 wieder ausgefahren, wobei die Füllung 37 in dem Behälter verbleibt.

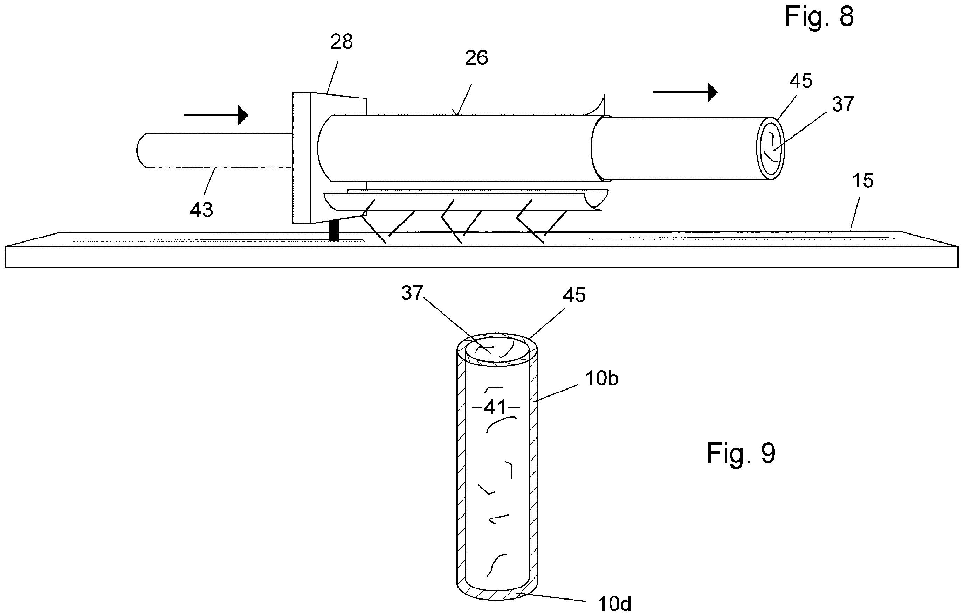

Fig. 8 zeigt das Austragen des Behälters 45 aus der Schäleinrichtung 26. Hierzu ist ein Kolben 43 vorgesehen, der an dem Antrieb 28 verfahrbar angeordnet ist.

Fig. 9 zeigt den essbaren Behälter 45, der aus der Gurke 10 hergestellt wurde. Der Behälter 45 weist eine Außenwand 10b auf, die den Innenhohlraum 41 begrenzt. Der in Fig. 9 oben liegend angeordnete Endbereich ist offen ausgebildet. Demgegenüber ist der in Fig. 7 unten liegende Endbereich durch den Boden 10d verschlossen.

Die Füllung 37 ist in dem Innenhohlraum 41 des Behälters 45 eingebracht. Der hohlzylindrische, verzehrbare Behälter 45 kann mit unterschiedlichen Füllungen 37 befüllt werden. Neben Fleischfüllungen, insbesondere Huhn und Rind, können auch Fischfüllungen, insbesondere Lachs und Thunfisch vorgesehen werden. Darüber hinaus können auch vegetarische Füllungen, beispielsweise Salat oder Reis, in den Behälter 45 eingebracht werden.

Somit wird ein essbarer Behälter 45 bestehend aus Gurkenfleisch bereit gestellt, der mit einer beliebigen Füllung 37 befüllbar ist.

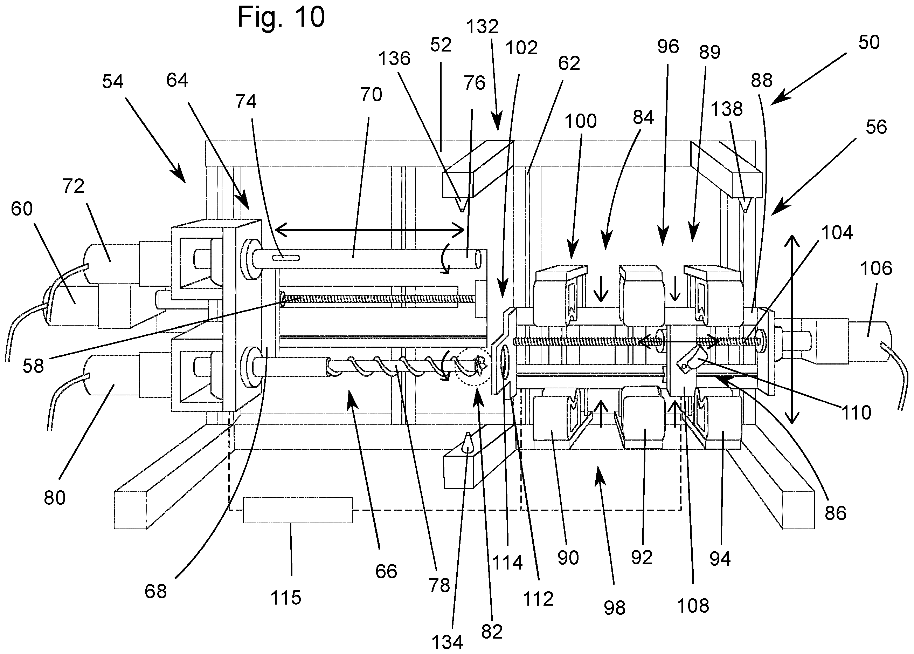

Fig. 10 zeigt eine Vorrichtung 50 zur Herstellung eines hohlzylindrischen, verzehrbaren Behälters nach einer zweiten Ausführungsform. Die Vorrichtung 50 weist einen Grundkörper 52, eine erste Bearbeitungseinrichtung 54 und eine zweite Bearbeitungsvorrichtung 56 auf.

Der Grundkörper 52 weist eine horizontal angeordnete Förderspindel 58 auf, die mit Hilfe eines Elektromotors 60 angetrieben werden kann. Außerdem weist der Grundkörper 52 eine Förderschiene 62 auf.

Die erste Bearbeitungseinrichtung 54 umfasst eine Halteeinrichtung 64, eine Aushöhleinrichtung 66 und einen Förderschlitten 68, wobei die Halteeinrichtung 64 und die Aushöhleinrichtung 66 fest an dem Förderschlitten 68 angeordnet sind. Dabei ist die Halteeinrichtung 64 parallel verlaufend über der Aushöhleinrichtung 66 angeordnet,

Die Halteeinrichtung 64 weist ein Hohlrohr 70 auf, das mit Hilfe eines Elektromotors 72 um die eigene Achse drehbar ist. An der Außenwand des Hohlrohrs 70 ist eine Entlüftungsöffnung 74 vorgesehen. Das Hohlrohr 70 weist eine glatte Oberfläche 76 auf.

Die Aushöhleinrichtung 52 weist einen Spiralbohrer 78 auf, der mit Hilfe eines Elektromotors 80 um die eigene Achse drehbar ist und an seiner Stirnseite eine Schneidvorrichtung 82 aufweist.

Die zweite Bearbeitungseinrichtung 56 umfasst eine Zentriereinrichtung 84, eine Schäleinrichtung 86 und einen Förderschlitten 88, wobei die Zentriereinrichtung 84 und die Schäleinrichtung 86 fest an dem Förderschlitten 88 angeordnet sind.

Die Zentriereinrichtung 84 weist drei Haltelemente 90, 92, 94 auf, die in horizontaler Richtung voneinander beabstandet angeordnet sind. Zur Aufnahme einer zu bearbeitenden Gurke 10 bilden die drei Halteelemente 90, 92, 94 eine erste Haltebacke 96 und eine zweite Haltebacke 98. Die erste Haltebacke 96 und die zweite Haltebacke 98 sind relativ zueinander verfahrbar. Zusätzlich sind die Halteelemente 90, 92, 94 mit einem Drucksensor 100 ausgestattet.

Die Schäleinrichtung 86 weist eine Abstreifeinrichtung 102, eine Förderspindel 104, die mit Hilfe eines Elektromotors 106 um die eigene Achse drehbar ist, und einen mit der Förderspindel 104 in Eingriff stehenden Förderschlitten 108 auf, an dem ein Schälmesser 110 angeordnet ist. Die Abstreifeinrichtung 102 umfasst eine Abstreifplatte 112 und eine in der Abstreifplatte 112 befindliche Durchgangsöffnung 114. Der Durchmesser der Durchgangsöffnung 114 ist sowohl größer als der Durchmesser des Spiralbohrers 78 als auch größer als der Durchmesser des Hohlrohres 70. Die Abstreifeinrichtung 102 ist am linken Ende der Förderspindel 104 mit der Förderspindel 104 verbunden und bildet mit der Förderspindel 104 einen rechten Winkel aus.

Die Schäleinrichtung 86 ist derart an dem Förderschlitten 88 angeordnet, dass die Abstreifplatte 112 parallel zu der linken Seite des Haltelements 90 verläuft und die Durchgangsöffnung 114 vertikal zentriert zu dem Halteelement 90 in Ruhestellung angeordnet ist. Die Förderspindel 104, der Elektromotor 106, der Förderschlitten 108 und das Schälmesser 110 sind räumlich hinter der Zentriereinrichtung 84 angeordnet.

Dadurch, dass sich der Förderschlitten 68 der ersten Bearbeitungseinrichtung 54 in Eingriff mit der Förderspindel 58 des Grundkörpers 52 befindet, ist die erste Bearbeitungseinrichtung 54 durch das Antreiben des Elektromotors 60 des Grundkörpers 52 horizontal bewegbar an dem Grundkörper 52 befestigt.

Außerdem ist der Förderschlitten 88 der zweiten Bearbeitungseinrichtung 56 in Eingriff mit den Förderschienen 62 des Grundkörpers 52 und führt dazu, dass die zweite Bearbeitungseinrichtung 56 vertikal bewegbar an dem Grundkörper 52 befestigt ist. Insbesondere ist die zweite Bearbeitungseinrichtung 56 von einer Zentrierposition in eine Schälposition bewegbar, wobei die Aushöhlposition vertikal unter der Schälpoistion liegt.

Wenn die erste Bearbeitungseinrichtung 54 so weit links wie möglich auf dem Grundkörper 52 angeordnet ist, ist die gesamte erste Bearbeitungseinrichtung 54 horizontal links neben der zweiten Bearbeitungseinrichtung 56 angeordnet. Wird die erste Bearbeitungseinrichtung 54 nach rechts verfahren, überschneidet sich die horizontale Anordnung der ersten Bearbeitungseinrichtung 54 teilweise mit der horizontalen Anordnung der zweiten Bearbeitungseinrichtung 56. Dazu kann der Spiralbohrer 78 durch die Durchgangsöffnung 114 hindurchtreten und sich vertikal zwischen der ersten Haltebacke 96 und der zweiten Haltebacke 98 erstrecken und sich das Hohlrohr 70 über der zweiten Bearbeitungseinrichtung 56 erstrecken, wenn sich die zweite Bearbeitungseinrichtung 56 in der Aushöhlposition befindet. Befindet sich die zweite Bearbeitungseinrichtung 56 in der Schälposition, kann das Hohlrohr 70 durch die Durchgangsöffnung 114 hindurchtreten und sich vertikal zwischen der ersten Haltebacke 96 und der zweiten Haltebacke 98 erstrecken. Der Spiralbohrer 78 kann sich unter der zweiten Bearbeitungseinrichtung 56 erstrecken.

Für einen automatisierten Ablauf steuert die Steuervorrichtung 115 das horizontale Verfahren der ersten Bearbeitungseinrichtung 54, das vertikale Verfahren der zweiten Bearbeitungseinrichtung 56, den Stellungswechsel der Zentriereinrichtung 84 sowie das Drehen des Spiralbohrers 78 und dem Hohlrohr 70.

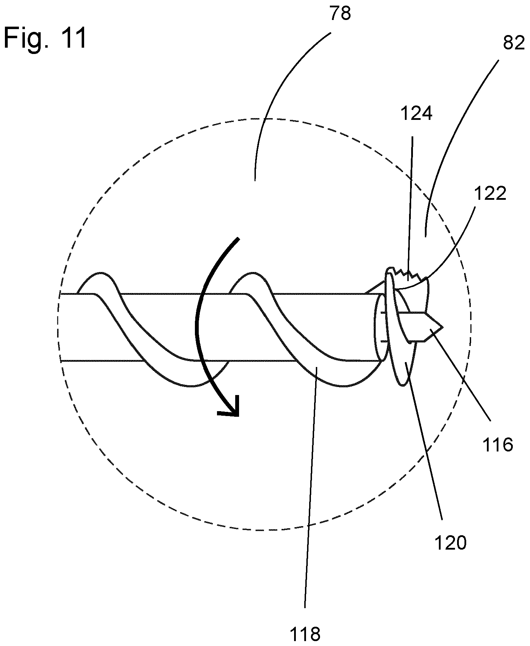

Fig. 11 zeigt eine vergrößerte Ansicht der Stirnseite des Spiralbohrers 78. Der Spiralbohrer 78 weist auf seiner Stirnseite eine Schneidvorrichtung 82 zum Schneiden eines definierten, beispielsweise planen, Bodens 10d im Hohlraum der Gurke, eine Bohrspitze 116 und eine Bohrspindel 118 zum Transportieren des Kerns aus der Gurke 10 nach außen, auf. Die Schneidvorrichtung 78 weist eine Spitzenspindel 120 und eine Durchgangsöffnung 122 auf. Die Spitzenspindel 120 bildet auf Höhe der Bohrspitze 116 eine Bohrschaufel 124, die auf Höhe der Bohrspitze 116 den Kern auf ganzer Breite des Durchmessers des Spiralbohrers 78 abträgt. Mithilfe der Spitzenspindel 120 kann der durch der Bohrschaufel 124 abgetragene Kern durch die Durchgangsöffnung 122 zu der Bohrspindel 118, und damit aus der Gurke 10 heraus, transportiert werden.

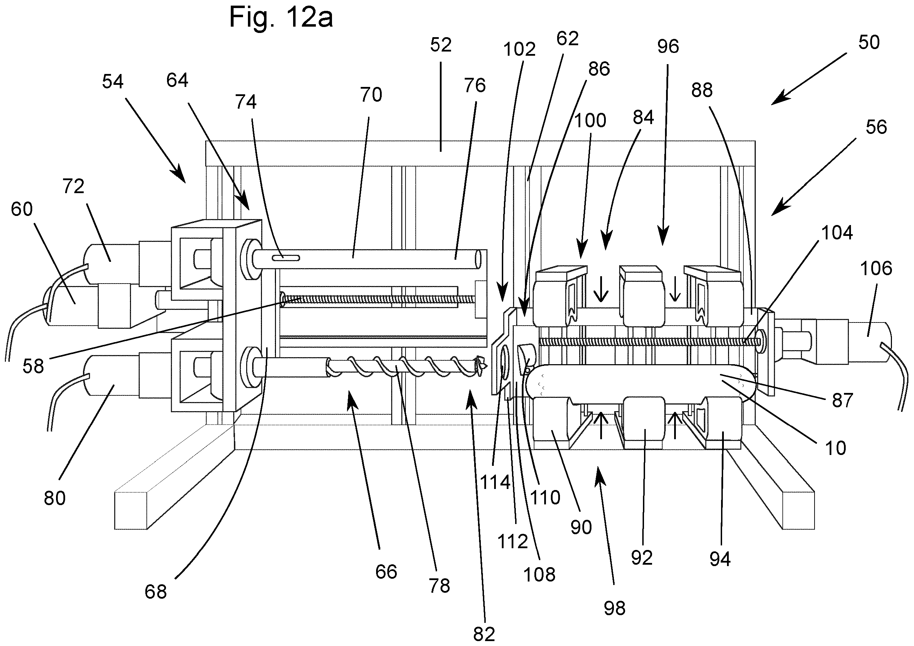

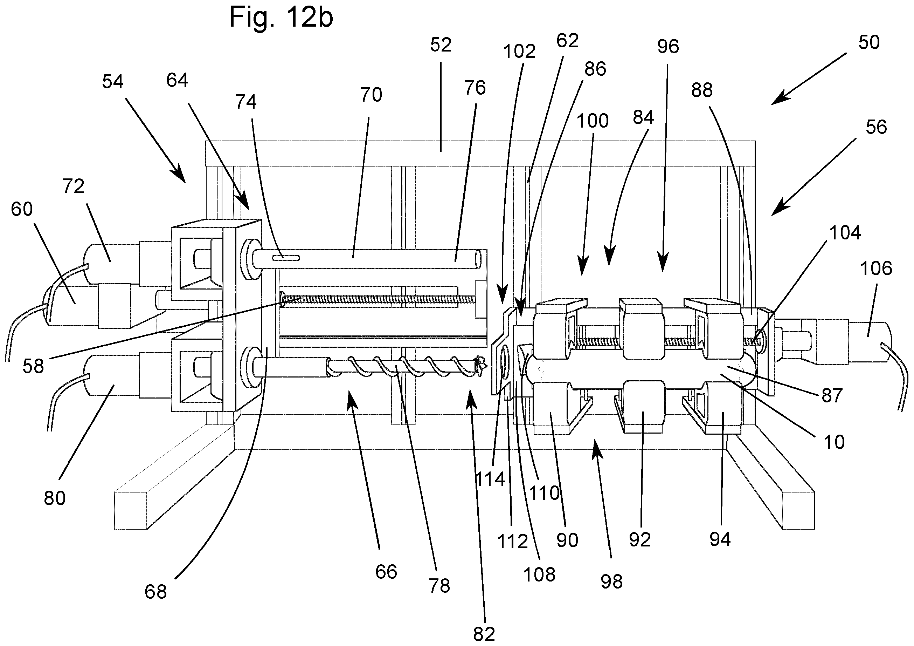

Die Funktionsweise der Zentriereinrichtung 84 wird in Fig. 12 beschrieben. Dabei zeigt Fig. 12a die Zentriereinrichtung 84 in Ruhestellung, wobei die Gurke 10 in die Zentriereinrichtung 84 eingelegt ist. Die Gurke 10 ist auf der zweiten Haltebacke 98 derart angeordnet, dass die Gurke 10 mit allen drei Halteelementen 90, 92, 94 in Kontakt steht.

Um die Gurke 10 zu fixieren und zu zentrieren, bewegen sich die erste Haltebacke 96 und die zweite Haltebacke 98 aufeinander zu und befördern die Gurke 10 auf die gleiche vertikale Höhe, auf der sich der Spiralbohrer 78 befindet. Das Zentrieren und Fixieren der Gurke 10 durch die erste Haltebacke 96 und die zweite Haltebacke 98 ist in Fig. 12b gezeigt. Während des Fixierens der Gurke 10 sorgen Drucksensoren 100 dafür, dass die Gurke 10 strukturell unversehrt bleibt. Da die erste Haltebacke 96 und die zweite Haltebacke 98 eine halbschalenähnliche Form zur Aufnahme der Gurke 10 aufweisen, müssen während des Fixierens nur noch Krümmungen der Gurke 10 ausgeglichen werden. Dieses Ausgleichen findet in einem Maße statt, in dem die Drucksensoren 100 eine strukturelle Unversehrtheit der Gurke 10 sicherstellen können.

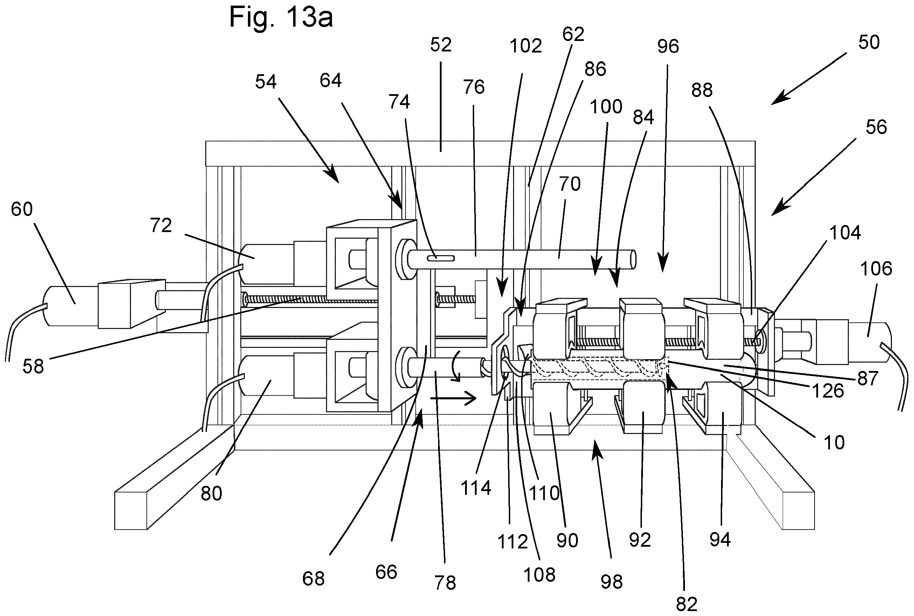

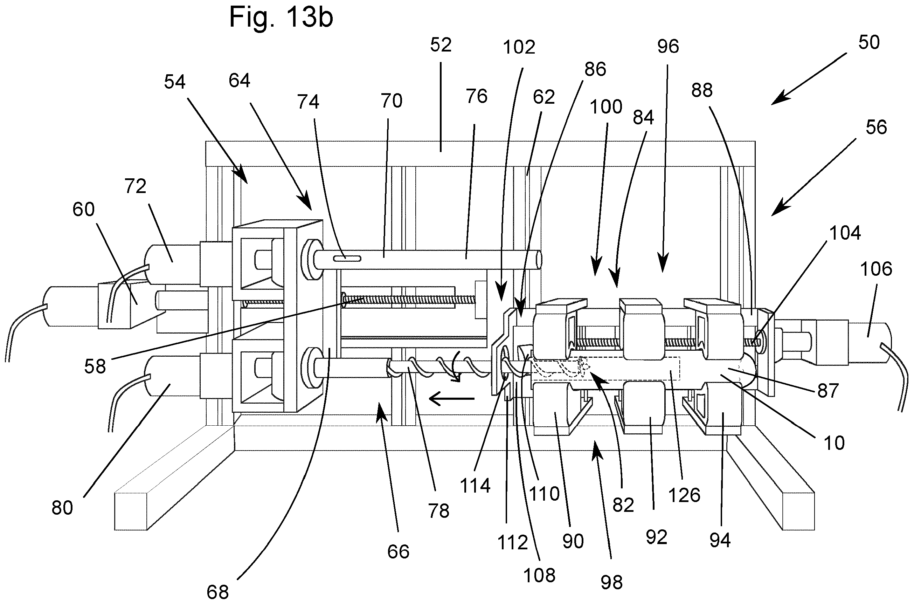

Anhand von Fig. 13 wird die Funktionsweise der Aushöhleinrichtung 66 beschrieben. Dank der Zentriereinrichtung 84 ist die Gurke 10 auf Höhe der Stirnseite des Spiralbohrers 78 fixiert. Das linke Ende der Gurke 10 wurde bereits mit einer Schneidvorrichtung (nicht gezeigt) links von dem Halteelement 90 abgetrennt. Wie in Fig. 13a zu sehen, sorgt der Elektromotor 80 dafür, dass sich der Spiralbohrer 78 dreht, um eine Bohrfunktion zu gewährleisten. Gleichzeitig sorgt der Elektromotor 60 dafür, dass sich die Förderspindel 58 dreht und sich der mit der Förderspindel 58 in Eingriff stehende Förderschlitten 68 mit der darauf befestigten Aushöhleinrichtung 66 nach rechts bewegt.

Der Spiralbohrer 78 tritt daraufhin durch die Durchgangsöffnung 114 der Abstreifeinrichtung 102 hindurch und in die Gurke 10 ein. Dabei bohrt der Spiralbohrer 78 einen Innenhohlraum 126 in die Gurke 10. Aufgrund der Schneidvorrichtung 82 auf der Stirnseite des Spiralbohrers 78 wird ein definierter Boden 128 in den Innenhohlraum 126 der Gurke 10 gebohrt.

Nachdem die Halteeinrichtung 64 genauso wie die Aushöhleinrichtung 66 an die Bewegung des Förderschlittens 68 gebunden sind, bewegt sich während des Aushöhlvorgangs ebenfalls die Halteeinrichtung 64 nach rechts. Da diese in diesem Schritt allerdings vertikal über der zweiten Bearbeitungseinrichtung 56 angeordnet ist, kann die Halteeinrichtung 64 problemlos über der zweiten Bearbeitungseinrichtung 56 horizontal verfahren werden.

Wie in Fig. 13b zu sehen ist, wird der Spiralbohrer 78 nach dem Ausbohren des Innenhohlraums 126, welcher gestrichelt dargestellt ist, in die Gurke 10 wieder zurück in seine Anfangsposition geführt.

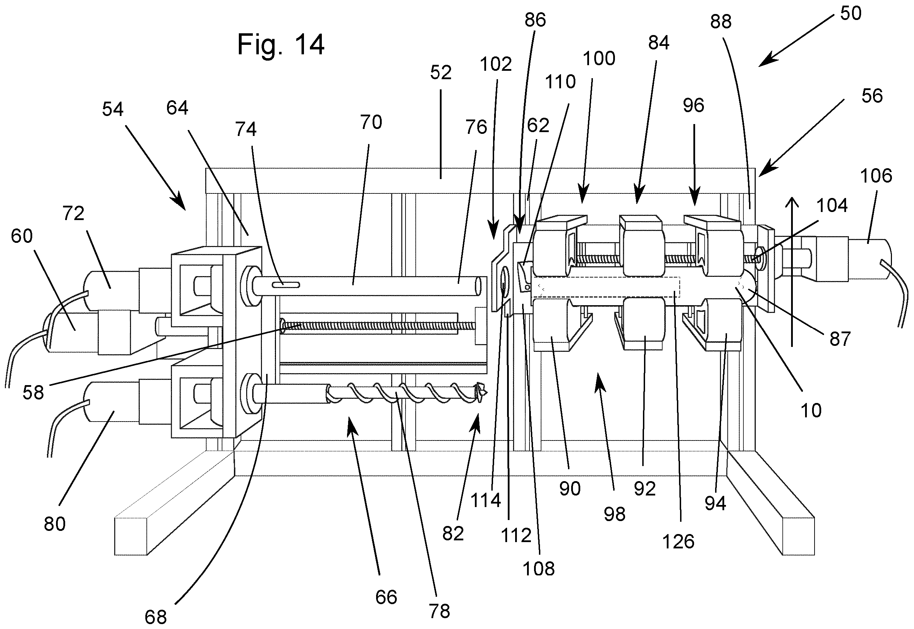

Fig. 14 zeigt das Befördern der zweiten Bearbeitungseinrichtung von der Aushöhlposition zu der Schälposition. In der Schälposition ist die Gurke 10 horizontal auf gleicher Höhe angeordnet wie das Hohlrohr 70.

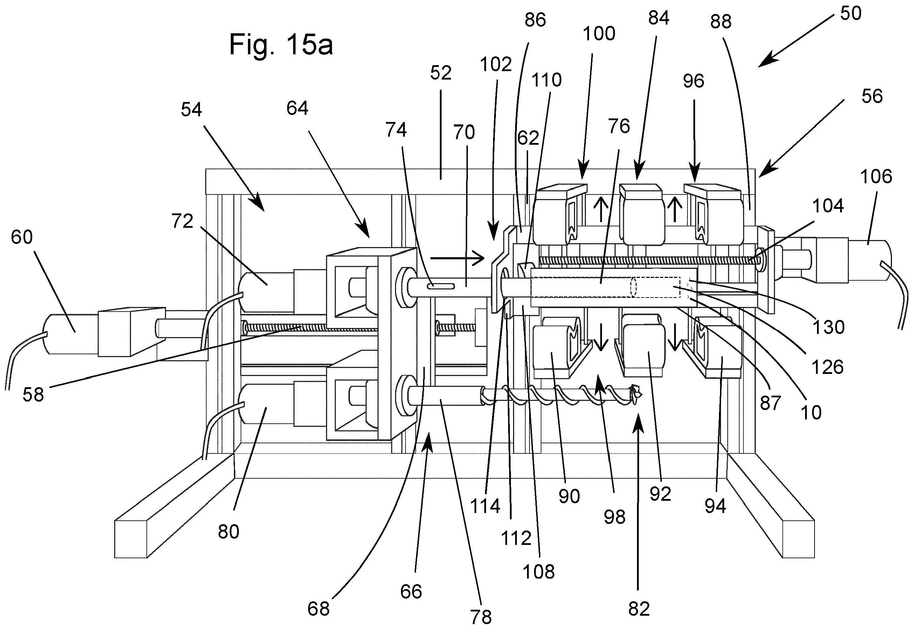

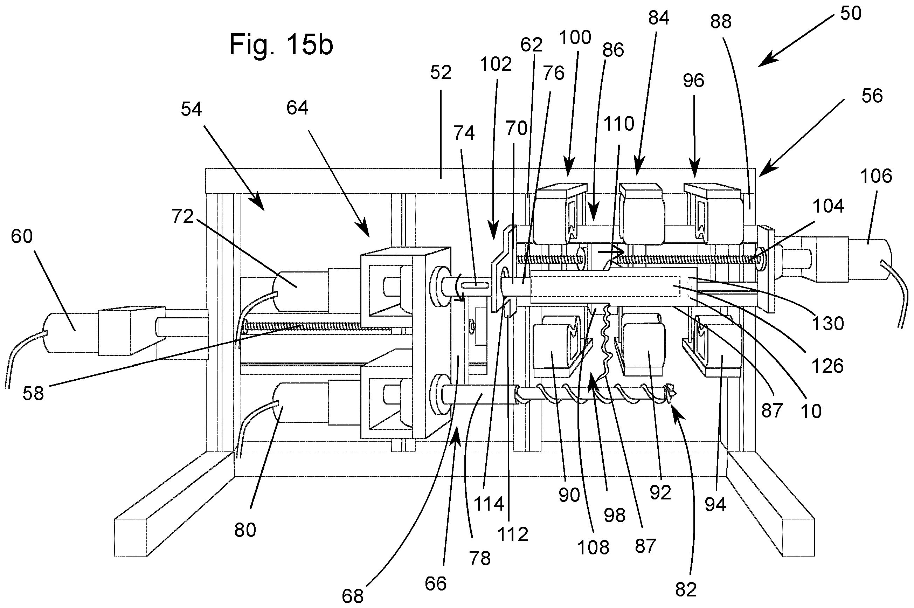

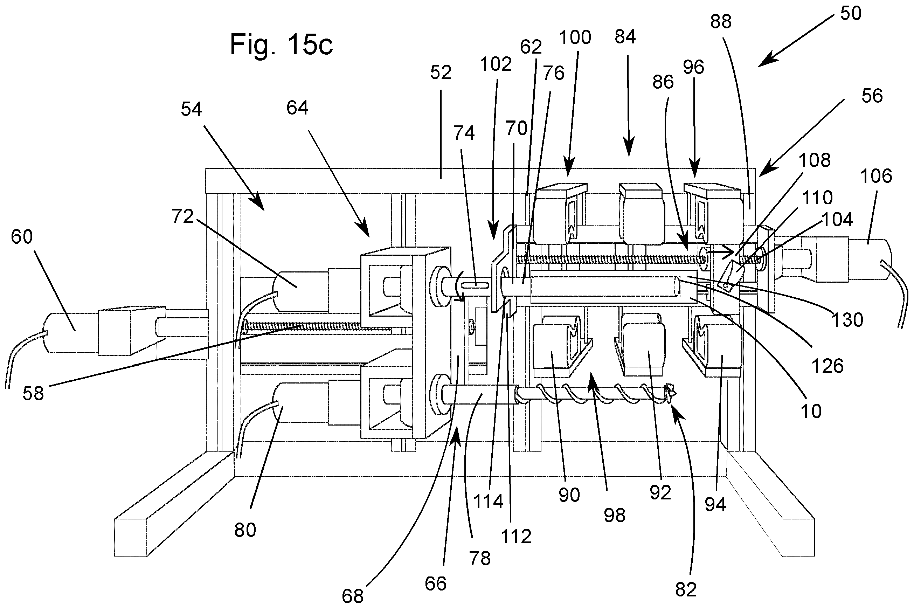

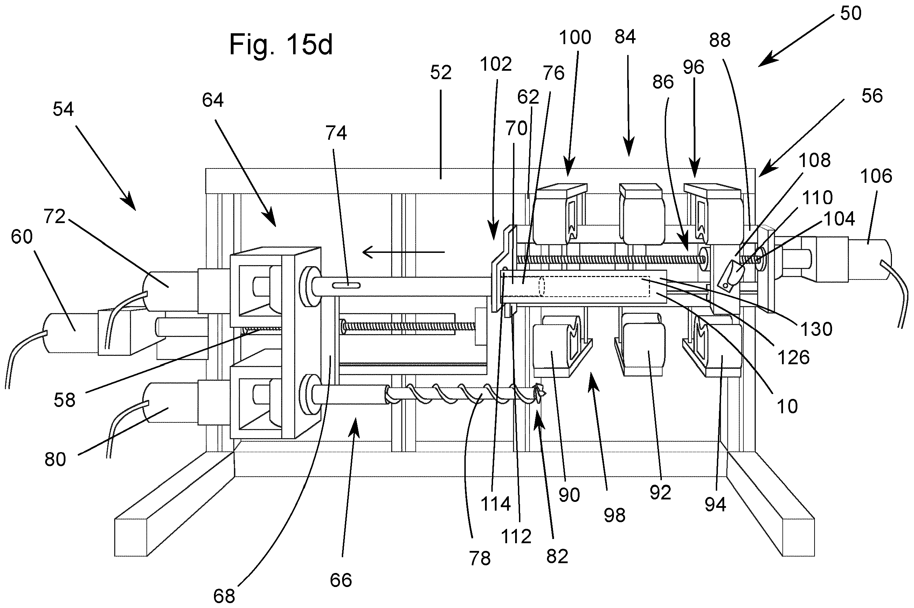

Fig. 15 zeigt die Funktionsweise der Schäleinrichtung 86. Da die Gurke 10 geschält werden soll, muss sie aus der Zentriereinrichtung 84 entfernt werden. Das Schälmesser 110 zum Schälen der Gurke 10 benötigt freien Zugang zu der Außenschale 87 der Gurke 10. Außerdem wurde das rechte Ende der Gurke an der Position links von dem Halteelement 94 abgeschnitten, um einen Boden 130 der Gurke 10 mit einer vorher festgelegten Dicke zu erhalten.

Deshalb treibt wie schon beim Aushöhlen der Elektromotor 60 die Förderspindel 58 an, um die erste Bearbeitungseinrichtung 54 horizontal nach rechts zu bewegen. Wie in Fig. 15a zu sehen, tritt das Hohlrohr 70 dabei durch die Durchgangsöffnung 114 der Abstreifeinrichtung 102 hindurch und in den Innenhohlraum 126 der Gurke 10 ein. Sobald das Hohlrohr 70 über die gesamte Länge des Innenhohlraums 126 der Gurke 10 eingetreten ist, wechselt die Zentriereinrichtung 84 von der Zentrierstellung zurück in die Ruhestellung und gibt so die Außenschale 87 der Gurke 10 frei.

Da der Durchmesser des Hohlrohres 70 in etwa dem Durchmesser des Innenhohlraumes 126 der Gurke 10 entspricht, wird die ausgehöhlte Gurke 10 durch eine Reibkraft, die zwischen der Oberfläche des Hohlrohres 70 und der feuchten Oberfläche des Innenhohlraumes 126 der Gurke 10 entsteht, gegen ein Verdrehen der Gurke 10 auf dem Hohlrohr 70 fixiert.

Dieser Effekt ist deshalb wichtig, da wie man in Fig. 15b sehen kann, der Elektromotor 72 beginnt, das Hohlrohr 70 zu drehen und zeitgleich der Elektromotor 106 beginnt, die Förderspindel 104 zu drehen, um den Förderschlitten 108 mit dem darauf angeordneten Schälmesser 110 nach rechts zu bewegen. Somit kann das Schälmesser 110 die Außenschale 87 der Gurke 10 entfernen. Die Reibkraft, die ein Verdrehen der Gurke 10 auf dem Hohlrohr 70 verhindert, muss demnach größer sein, als die Gegenkraft, die durch das Schälen des Schälmessers entsteht. Aus diesem Grund weist das Hohlrohr 70 eine möglichst glatte, und somit möglichst große, Oberfläche 76 auf. Denn je größer die Kontaktfläche zwischen Hohlrohr 70 und der Oberfläche des Innenhohlraumes 126 der Gurke 10 ist, desto höher ist auch die Reibkraft, die ein Verdrehen der Gurke 10 auf dem Hohlrohr 70 verhindert.

Fig. 15c und Fig. 15d zeigen das Verfahren nach dem Schälvorgang. Die Schäleinrichtung 86 bleibt nach dem rechten Ende der Gurke 10 stehen und wie in Fig. 15d gezeigt endet das Drehen des Hohlrohres 70. Die fertig ausgehöhlte und geschälte Gurke muss nun von der Halteeinrichtung 64 entfernt werden. Dazu wird, wie oben beschrieben, die erste Bearbeitungseinrichtung 52 nach links bewegt und das Hohlrohr 70 tritt wieder aus der Durchgangsöffnung 114 der Abstreifvorrichtung 102 heraus. Die auf dem Hohlrohr 70 befindliche Gurke 10 hat allerdings einen größeren Durchmesser als die Durchgangsöffnung 114 der Abstreifvorrichtung 102. Deshalb wird die Gurke 10 durch das Bewegen der ersten Bearbeitungseinrichtung 54 nach links an der Abstreifplatte 112 der Abstreifvorrichtung 102 abgestreift und kann aus der Vorrichtung 50 entfernt werden.

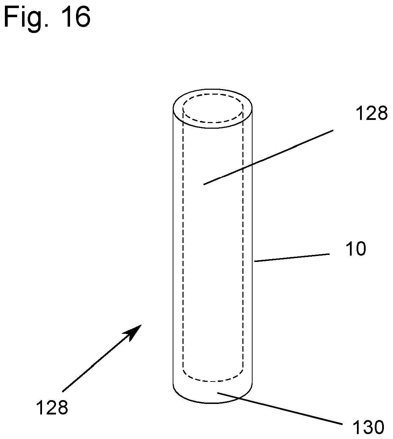

Das Endprodukt ist ein wie in Fig. 16 dargestellter befüllbarer Behälter, dessen Herstellung reproduzierbar ist. Die Gurke 10 ist nun geschält und an den Enden abgeschnitten, was zu einer zylindrischen Form der Gurke 10 führt. Außerdem wurde ein Innenhohlraum 128 hergestellt, der die Gurke 10 befüllbar macht. Durch die besondere Ausbildung der Aushöhleinrichtung 66 weist die Gurke 10 einen definierten Boden 130 im Innenhohlraum 128 auf.

Zusätzlich kann, wie in Fig. 11 dargestellt, für das regelmäßige, automatische Reinigen des mit der Gurke 10 in Kontakt tretenden Spiralbohrers 78, dem Hohlrohr 70 und dem Schälmesser 110 eine Reinigungseinrichtung 132 vorgesehen sein, die mit Hilfe eines Fluides die jeweiligen Elemente nach dem Gebrauch reinigt.

Hierzu weist die Reinigungseinrichtung 132 eine Reinigungsdüse 134 zum Reinigen des Spiralbohrers 78 auf, um den Spiralbohrer 78 beim Herausfahren aus der Gurke 10 zu reinigen.

Weiter weist die Reinigungseinrichtung 132 eine Reinigungsdüse 136 zum Reinigen des Hohlrohres 70 auf, um das Hohlrohr 70 beim Herausfahren aus der Gurke 10 zu reinigen. Außerdem weist die Reinigungseinrichtung 132 im Inneren des Hohlrohrs 70 eine weitere Reinigungsdüse (nicht gezeigt) auf, um das Hohlrohr 70 von innen zu reinigen, wenn es von der Gurke 10 getrennt wurde.

Die Reinigungseinrichtung 132 weist eine Reinigungsdüse 138 auf, um das Schälmesser 110 nach dem Schälen der Gurke 10 zu reinigen.

Die Reinigungsdüse 134 ist am Grundkörper 52 in horizontaler Richtung auf Höhe der Schneidvorrichtung 82 und in vertikaler Richtung unter der ersten Bearbeitungseinrichtung 54 angeordnet.

Die Reinigungsdüse 136 ist am Grundkörper 52 in horizontaler Richtung auf Höhe der Schneidvorrichtung 82 und in vertikaler Richtung über der ersten Bearbeitungseinrichtung 54 angeordnet.

Die Reinigungsdüse 138 ist am Grundkörper 52 in horizontaler Richtung am rechten Ende der Förderspindel 104 und in vertikaler Richtung über der zweiten Bearbeitungseinrichtung 56 angeordnet.

Die Reinigungsvorrichtung 132 weist vorzugsweise eine Pumpe auf, die alle Reinigungsdüsen 134, 136, 138 mit Fluid versorgt. Alternativ weist die Reinigungsvorrichtung 132 mehrere Pumpen auf, um jede Reinigungsdüse seperat mit Fluid zu versorgen.

### Bezugszeichenliste

- 10: Gurke
- 11: Zentriereinrichtung
- 10a: Kern
- 10b: Außenwand
- 10c: Schale
- 10d: Boden
- 12a,b,c,d: Zentrierschale
- 13a,13b,13c,13d: Halter
- 14: Steuereinrichtung
- 15: Grundkörper
- 16: Längsnut
- 17: Schneideinrichtung
- 18: Ständer
- 19: Messer
- 20: Vorrichtung
- 21: Aushöhleinrichtung
- 23: Hohlmesser
- 23a: Verzahnung
- 23b: Schneidvorrichtung
- 24: Antrieb
- 25: Schalter
- 26: Schäleinrichtung
- 27: Hohlmesser
- 27a: Verzahnung
- 28: Antrieb
- 29: Schalter
- 30: Fuß
- 36: Befülleinrichtung
- 37: Füllung
- 38: Lagerblock
- 39: Kolben
- 40: Schlitten
- 41: Innenhohlraum
- 42: Pfeil
- 45: Behälter
- 50: Vorrichtung
- 52: Grundkörper
- 54: erste Bearbeitungseinrichtung
- 56: zweite Bearbeitungseinrichtung
- 58: Förderspindel
- 60: Elektromotor
- 62: Förderschienen
- 64: Halteeinrichtung
- 66: Aushöhleinrichtung
- 68: Förderschlitten
- 70: Hohlrohr
- 72: Elektromotor
- 74: Entlüftungsöffnung
- 76: glatte Oberfläche
- 78: Spiralbohrer
- 80: Elektromotor
- 82: Schneidvorrichtung
- 84: Zentriereinrichtung
- 87: Außenschale
- 86: Schäleinrichtung
- 88: Förderschlitten
- 89: Halteeinheit
- 90: Halteelement
- 92: Halteelement
- 94: Halteelement
- 96: erste Haltebacke
- 98: zweite Haltebacke
- 100: Drucksensor
- 102: Abstreifeinrichtung
- 104: Förderspindel
- 106: Elektromotor
- 108: Förderschlitten
- 110: Schälmesser
- 112: Abstreifplatte
- 114: Durchgangsöffnung
- 115: Steuervorrichtung
- 116: Bohrspitze
- 118: Bohrspindel
- 120: Spitzenspindel
- 122: Durchgangsöffnung
- 124: Bohrschaufel
- 126: Behälter
- 128: Innenhohlraum
- 130: Boden
- 132: Reinigungseinrichtung
- 134: Reinigungsdüse
- 136: Reinigungsdüse
- 138: Reinigungsdüse

## Patentansprüche

1. Verfahren zur Herstellung eines hohlzylindrischen, verzehrbaren Behälters (45, 130) aus einer Gemüse- oder Obstfrucht (10), insbesondere einer Gurke, Zucchini oder dergleichen, der mit einer Füllung (37) befüllbar ist, mit folgenden Verfahrensschritten:
a) Zentrieren und Fixieren der Frucht (10) sowie Nivellieren der Frucht (10) über deren gesamte Länge in einer Zentriereinrichtung (11, 84);
b) Abtrennen mindestens eines Endbereiches der Frucht (10);
c) Aushöhlen des Kerns (10a) der Frucht (10) zur Bildung eines Innenhohlraumes (41,128), wobei der Kern (10a) nur über einen Teilbereich der Frucht (10) ausgehöhlt wird, so dass ein geschlossener Boden (10d, 130) der Frucht (10) zurückbleibt;
d) Entfernen einer Außenschale (10c, 87) der Frucht (10);
e) wobei die Zentriereinrichtung (11, 87) von einer Zentrierstellung in eine Schälstellung wechselt, wobei in der Zentrierstellung die Verfahrensschritte a) bis c) ausgeführt werden und in der Schälstellung der Verfahrensschritt d) ausgeführt wird.

2. Verfahren nach Anspruch 1,
**dadurch gekennzeichnet, dass** der Innenhohlraum (41) des Behälters (45, 126) mit einer geeigneten Füllung (37) befüllt wird.

3. Verfahren nach einem der voranstehenden Ansprüche,
**dadurch gekennzeichnet, dass** die Zentriereinrichtung (11, 84) zum Zentrieren und Fixieren der Frucht (10) von einer Ruhestellung in eine Fixierstellung wechselt, wobei die Frucht (10) in der Ruhestellung in die Zentriereinrichtung (11, 87) einsetzbar ist, während die Frucht (10) in der Fixierstellung fest fixiert und zentriert ist.

4. Verfahren nach Anspruch 3,
**dadurch gekennzeichnet, dass** die Frucht (10) in der Schälstellung von einer Halteeinrichtung (64) gehalten wird.

5. Verfahren nach Anspruch 4,
**dadurch gekennzeichnet, dass** ein Hohlrohr (70) der Halteeinrichtung (64) in den Innenhohlraum (41, 128) der Frucht (10) eingeführt wird, um die Frucht (10) zu fixieren.

6. Hohlzylinderförmiger Behälter (45, 126), hergestellt nach einem der Ansprüche 1 bis 5.

7. Vorrichtung (20, 50) zur Herstellung eines hohlzylindrischen, verzehrbaren Behälters (45, 126) aus einer Gemüse- oder Obstfrucht (10), insbesondere einer Gurke, Zucchini oder dergleichen, der mit einer Füllung (37) befüllbar ist, mit
a) einer Zentriereinrichtung (11, 84) zum Zentrieren und Fixieren der Frucht (10) sowie Nivellieren der Frucht (10) über deren gesamte Länge;
b) einer Aushöhleinrichtung (21, 66) zum Entfernen des Kerns (10a) der Frucht (10) und Bildung eines Innenhohlraumes (41, 128), wobei die Aushöhleinrichtung (21, 66) eine Schneidvorrichtung (23b, 82) zum Abtrennen des Kerns (10a, 132) von einem Boden (10d, 130) der Frucht (10) aufweist;
c) einer Schäleinrichtung (26, 86) zum Entfernen der Außenschale der Frucht (10); **gekennzeichnet dadurch, dass**
d) die Zentriereinrichtung (11,84) dazu eingerichtet ist von einer Zentrierstellung, in der die Frucht zentriert, fixiert und nivelliert wird, mindestens einer der Endbereiche der Frucht (10) abgetrennt und der Kern (10a) der Frucht (10) zur Bildung eines Innenhohlraumes (41,128) ausgehöhlt wird, in eine Schälstellung, in der die Außenschale der Frucht (10) entfernt wird, zu wechseln.

8. Vorrichtung (20, 50) nach Anspruch 7,
**dadurch gekennzeichnet, dass** eine Schneideinrichtung (17) zum Abtrennen eines Endbereiches (10d, 10e) der Frucht (10) vorgesehen ist.

9. Vorrichtung (20, 50) nach Anspruch 8,
**dadurch gekennzeichnet, dass** die Zentriereinrichtung (11, 84) eine Halteeinheit (89) aufweist.

10. Vorrichtung (20, 50) nach Anspruch 9,
**dadurch gekennzeichnet, dass** die Halteeinheit (89) mehrere Halteelemente (90, 92, 94) umfasst, die in Längsrichtung versetzt angeordnet sind.

11. Vorrichtung (20, 50) nach Anspruch 10,
**dadurch gekennzeichnet, dass** die Halteelemente (90, 92, 94) jeweils eine erste Haltebacke (96) und eine zweite Haltebacke (98) ausbilden, die relativ zueinander verfahrbar sind.

12. Vorrichtung (20, 50) nach einem der Ansprüche 10 oder 11,
**dadurch gekennzeichnet, dass** die Halteelemente (90, 92, 94) mit einem Drucksensor (100) ausgestattet sind.

13. Vorrichtung (20, 50) nach einem der Ansprüche 7 bis 12,
**dadurch gekennzeichnet, dass** die Schneidvorrichtung (23b, 82) zum Schneiden eines definierten Bodens (10d, 130) im Innenhohlraum (41, 128) der Frucht (10) ausgebildet ist.

14. Vorrichtung (20, 50) nach Anspruch 13,
**dadurch gekennzeichnet, dass** die Aushöhleinrichtung (21, 66) als Spiralbohrer (78) ausgebildet ist, bei dem stirnseitig die Schneidvorrichtung (23b, 82) zum Schneiden eines definierten Bodens (10d, 130) angeordnet ist.

15. Vorrichtung (20, 50) nach einem der Ansprüche 7 bis 14,
**dadurch gekennzeichnet, dass** die Vorrichtung (20,50) eine Halteeinrichtung (64) zum Fixieren der Frucht (10) in der Schälstellung aufweist, die vorteilhaft als Hohlrohr (70) ausgebildet ist, das in den Innenhohlraum (41, 128) der Frucht (10) einführbar ist, um die Frucht (10) zu fixieren.

## Claims

1. A method for producing a hollow cylindrical edible container (45, 130) from a vegetable or a fruit (10), in particular a cucumber, courgette, or the like, which can be filled with a filling (37), comprising the following process steps:
a) centring and fixing the fruit (10) as well as levelling the fruit (10) along its entire length in a centring device (11, 84);
b) separating at least one end portion of the fruit (10);
c) hollowing out the core (10a) of the fruit (10) to form an interior cavity (41; 128), the core (10a) being hollowed out only over a partial region of the fruit (10), so that a closed bottom (10d, 130) of the fruit (10) remains;
d) removing an outer shell (10c, 87) of the fruit (10);
e) said centring device (11, 87) switching from a centring position to a peeling position, wherein in the centring position the process steps a) to c) are performed and in the peeling position the process step d) is performed.

2. The method according to claim 1,
**characterized in that** the interior cavity (41) of the container (45, 126) is filled with a suitable filling (37).

3. The method according to any one of the preceding claims,
**characterized in that** the centring device (11, 84) for centring and fixing the fruit (10) switches from a rest position to a fixing position, the fruit (10) being insertable into the centring device (11, 87) in the rest position, while the fruit (10) is firmly fixed and centred in the fixing position.

4. The method according to claim 3,
**characterized in that** the fruit (10) is held in the peeling position by a holding device (64).

5. The method according to claim 4,
**characterized in that** a hollow tube (70) of the holding device (64) is introduced into the interior cavity (41, 128) of the fruit (10) in order to fix the fruit (10).

6. A hollow cylindrical container (45, 126), produced according to any one of claims 1 to 5.

7. A device (20, 50) for producing a hollow cylindrical edible container (45, 126) from a vegetable or a fruit (10), in particular a cucumber, courgette, or the like, which can be filled with a filling (37), comprising:
a) a centring device (11, 84) for centring and fixing the fruit (10) as well as levelling the fruit (10) along its entire length;
b) a hollowing-out device (21, 66) for removing the core (10a) of the fruit (10) and forming an interior cavity (41, 128), wherein the hollowing-out device (21, 66) comprises a cutting device (23b, 82) for separating the core (10a, 132) from a bottom (10d, 130) of the fruit (10);
c) a peeling device (26, 86) for removing the outer shell of the fruit (10); **characterized in that**
d) the centring device (11, 84) is adapted to switch from a centring position in which the fruit is centred, fixed and levelled, at least one of the end portions of the fruit (10) is separated and the core (10a) of the fruit (10) is hollowed out in order to form an interior cavity (41,128), to a peeling position in which the outer shell of the fruit (10) is removed.

8. The device (20, 50) according to claim 7,
**characterized in that** a cutting device (17) is provided for separating an end portion (10d, 10e) of the fruit (10).

9. The device (20, 50) according to claim 8,
**characterized in that** the centring device (11, 84) comprises a holding unit (89).

10. The device (20, 50) according to claim 9,
**characterized in that** the holding unit (89) comprises several holding elements (90, 92, 94), which are arranged offset in the longitudinal direction.

11. The device (20, 50) according to claim 10,
**characterized in that** the holding elements (90, 92, 94) each form a first holding jaw (96) and a second holding jaw (98), which can travel relative to each other.

12. The device (20, 50) according to any one of claims 10 or 11,
**characterized in that** the holding elements (90, 92, 94) are provided with a pressure sensor (100).

13. The device (20, 50) according to any one of claims 7 to 12,
**characterized in that** the cutting device (23b, 82) is designed for cutting a defined bottom (10d, 130) in the interior cavity (41, 128) of the fruit (10).

14. The device (20, 50) according to claim 13,
**characterized in that** the hollowing-out device (21, 66) is designed as a spiral drill (78), in which the cutting device (23b, 82) for cutting a defined bottom (10d, 130) is arranged at the front side.

15. The device (20, 50) according to any one of claims 7 to 14,
**characterized in that** the device (20, 50) comprises a holding device (64) for fixing the fruit (10) in the peeling position, the holding device (64) advantageously being designed as a hollow tube (70) which can be introduced into the interior cavity (41, 128) of the fruit (10) in order to fix the fruit (10).

## Revendications

1. Procédé pour produire un conteneur consommable cylindrique creux (45, 130) à partir d'un fruit (10) de légumes ou de fruits, en particulier d'un concombre, d'une courgette ou similaire, qui peut être rempli d'une garniture (37), comprenant les étapes suivantes consistant à:
a) centrer et fixer le fruit (10) et niveler le fruit (10) sur toute sa longueur dans un moyen de centrage (11, 84);
b) séparer au moins une zone d'extrémité du fruit (10);
c) évider le cœur (10a) du fruit (10) pour former une cavité intérieure (41, 128), le cœur (10a) étant évidé uniquement sur une zone partielle du fruit (10), de manière à laisser un fond fermé (10d, 130) du fruit (10);
d) enlever une pelure extérieure (10c, 87) du fruit (10);
e) le moyen de centrage (11, 87) passant d'une position de centrage jusque dans une position d'épluchage, les étapes a) à c) étant effectuées dans la position de centrage, et l'étape d) étant effectuée dans la position d'épluchage.

2. Procédé selon la revendication 1,
**caractérisé en ce que** la cavité intérieure (41) du conteneur (45, 126) est remplie d'une garniture appropriée (37).

3. Procédé selon l'une des revendications précédentes,
**caractérisé en ce que** le moyen de centrage (11, 84) destiné à centrer et à fixer le fruit (10) passe d'une position de repos à une position de fixation, et le fruit (10) peut être inséré dans le moyen de centrage (11, 87) en position de repos, tandis que le fruit (10) est fixé et centré fermement en position de fixation.

4. Procédé selon la revendication 3,
**caractérisé en ce que** le fruit (10) est maintenu en position d'épluchage par un moyen de maintien (64).

5. Procédé selon la revendication 4,
**caractérisé en ce qu'**un tube creux (70) du moyen de maintien (64) est inséré dans la cavité intérieure (41, 128) du fruit (10) pour fixer le fruit (10).

6. Conteneur cylindrique creux (45, 126) produit conformément à l'une des revendications 1 à 5.

7. Dispositif (20, 50) pour produire un conteneur consommable cylindrique creux (45, 126) à partir d'un fruit (10) de légumes ou de fruits, en particulier d'un concombre, d'une courgette ou similaire, qui peut être rempli d'une garniture (37), comprenant
a) un moyen de centrage (11, 84) pour centrer et fixer le fruit (10) et pour niveler le fruit (10) sur toute sa longueur;
b) un moyen d'évidement (21, 66) pour enlever le cœur (10a) du fruit (10) et pour former une cavité intérieure (41, 128), le moyen d'évidement (21, 66) comprenant un moyen de coupe (23b, 82) pour séparer le cœur (10a, 132) d'un fond (10d, 130) du fruit (10);
c) un moyen d'épluchage (26, 86) pour enlever la pelure extérieure du fruit (10);
**caractérisé en ce que**
d) le moyen de centrage (11, 84) est conçu pour passer d'une position de centrage dans laquelle le fruit est centré, fixé et nivelé et dans laquelle l'une au moins des zones d'extrémité du fuit (10) est séparée et le cœur (10a) du fuit (10) est évidé pour former une cavité intérieure (41, 128), jusque dans une position d'épluchage dans laquelle la pelure extérieure du fuit (10) est enlevée.

8. Dispositif (20, 50) selon la revendication 7,
**caractérisé en ce qu'**il est prévu un moyen de coupe (17) pour séparer une zone d'extrémité (10d, 10e) du fruit (10).

9. Dispositif (20, 50) selon la revendication 8,
**caractérisé en ce que** le moyen de centrage (11, 84) comprend un ensemble de maintien (89).

10. Dispositif (20, 50) selon la revendication 9,
**caractérisé en ce que** l'ensemble de maintien (89) comprend plusieurs éléments de maintien (90, 92, 94) qui sont disposés de façon décalée en direction longitudinale.

11. Dispositif (20, 50) selon la revendication 10,
**caractérisé en ce que** les éléments de maintien (90, 92, 94) constituent chacun une première mâchoire de maintien (96) et une seconde mâchoire de maintien (98) qui sont mobiles l'une par rapport à l'autre.

12. Dispositif (20, 50) selon l'une des revendications 10 ou 11,
**caractérisé en ce que** les éléments de maintien (90, 92, 94) sont équipés d'un capteur de pression (100).

13. Dispositif (20, 50) selon l'une des revendications 7 à 12,
**caractérisé en ce que** le moyen de coupe (23b, 82) est réalisé pour couper un fond défini (10d, 130) dans la cavité intérieure (41, 128) du fruit (10).

14. Dispositif (20, 50) selon la revendication 13,
**caractérisé en ce que**
le moyen d'évidement (21, 66) est réalisé sous forme de foret hélicoïdal (78) sur la face frontale duquel est disposé le dispositif de coupe (23b, 82) pour couper un fond défini (10d, 130).

15. Dispositif (20, 50) selon l'une des revendications 7 à 14,
**caractérisé en ce que** le dispositif (20, 50) comprend un moyen de maintien (64) pour fixer le fruit (10) dans la position d'épluchage, qui est réalisé avantageusement sous forme de tube creux (70) qui peut être inséré dans la cavité intérieure (41, 128) du fruit (10) pour fixer le fruit (10).
